# EUROPEAN PATENT APPLICATION

(11) **EP 1 408 525 A1**
(43) Date of publication of application: **14.04.2004**
(21) Application number: 02753190.4
(22) Date of filing: 18.07.2002
(51) Int. Cl.: H01J 1/304, H01J 9/02, H01J 29/04, H01J 31/12

(54) **ELECTRON EMITTER AND METHOD FOR FABRICATING THE SAME, COLD CATHODE FIELD ELECTRON EMISSION ELEMENT AND METHOD FOR FABRICATING THE SAM, AND COLD CATHODE FIELD ELECTRON EMISSION DISPLAY AND METHOD FOR MANUFACTURING THE SAME**

(30) Priority: 18.07.2001 JP 2001218624; 30.11.2001 JP 2001366098; 17.07.2002 JP 2002208625
(71) Applicant: Sony Corporation, Tokyo 141-0001 (JP)
(72) Inventor: YAGI, Takao, c/o SONY CORPORATION, Tokyo 141-0001 (JP); SHIMAMURA, Toshiki, c/o SONY CORPORATION, Tokyo 141-0001 (JP)
(74) Representative: Thévenet, Jean-Bruno
(86) International application number: PCT/JP2002/007290
(87) International publication number: WO 2003/009325

(57) **Abstract**

A cold cathode field emission device comprises; a cathode electrode 11 formed on a supporting member 10, an insulating layer 12 formed on the supporting member 10 and the cathode electrode 11, a gate electrode 13 formed on the insulating layer 12, an opening portion 14A, 14B formed through the gate electrode 13 and the insulating layer 12, and an electron emitting portion 15 formed on the portion of the cathode electrode 11 positioned in the bottom portion of the opening portion 14B, and said electron emitting portion 15 comprises a matrix, 21 and carbon nanotube structures 20 embedded in the matrix 21 in a state where the top portion of each carbon nanotube structure is projected.

## Description

### TECHNICAL FIELD

The present invention relates to an electron emitting member and a manufacturing method thereof, a cold cathode field emission device and a manufacturing method thereof, and, a cold cathode field emission display and a manufacturing method thereof.

### BACKGROUND ART

In recent years, there have been discovered a carbon crystal having a tube structure in which carbon graphite sheets are rolled up, which is called a carbon nanotube, and a carbon nanofiber. The carbon nanotube has a diameter of approximately 1 nm to 200 nm, and there are known a single-wall carbon nanotube having a structure in which one layer of a carbon graphite sheet is rolled up and a multi-wall carbon nanotube having a structure in which two or more layers of carbon graphite sheets are rolled up. Such a crystal having a tube structure of the above nano size has no other crystal incomparable thereto and is considered a specific substance. Further, the carbon nanotube has the property of being semiconductive or conductive depending upon how the carbon graphite sheets are rolled up, and it is expected to find wide applications to electronic and electric devices due to the above specific property.

When an electric field having an intensity equal to, or greater than, a certain threshold value is applied to a metal or semiconductor placed in vacuum, electrons pass a energy barrier in the vicinity of the surface of the metal or semiconductor on the basis of a quantum tunnel effect, and electrons are emitted into the vacuum even at an ordinary temperature. The electron emission based on the above principle is called cold cathode field emission or, simply, field emission. In recent years, there have been proposed a flat-type cold cathode field emission display, so-called field emission display (FED), in which cold cathode field emission devices employing the principle of the above field emission are applied to image display. Since FEDs have advantages such as high brightness and low power consumption, they are expected as image displays that can replace conventional cathode ray tubes (CRTs).

When such a cold cathode field emission device (to be sometimes referred to as "field emission device" hereinafter) is applied to a cold cathode field emission display (to be sometimes referred to as "display" hereinafter), the field emission device is required to cause an emission current of 1 to 10 mA/cm², and when it is applied to a microwave amplifier, it is required to cause an emission current of 100 mA/cm² or more. Further, the field emission device is required to emit electrons stably over a long period of time (for example, 100,000 hours or more), and it is also required to have electron emission stability in a short period of time (approximately millisecond) (that is, to cause noises to a less degree). For satisfying the above requirements, a material constituting an electron emitting portion of the field emission device is required to be chemically stable, required to be capable of emitting electrons at a low voltage (that is, have a low threshold voltage) and required to have an electron emission property that has fluctuations to a less degree to temperatures. Further, it is also required to maintain high vacuum in the vicinity of the electron emitting portion, and the vicinity of the electron emitting portion is required to be free of any substance that releases gases.

The above field emission device or display is one of products in fields where the application of the carbon nanotube or carbon nanofiber (to be generally referred to as "carbon nanotube structure" hereinafter) is the most expected. That is, the carbon nanotube structure has very high crystallinity, so that it is a chemically, physically and thermally stable material. The carbon nanotube structure has a remarkably high aspect ratio, has a top portion on which an electric field easily converges, has a low threshold electric field as compared with any refractory metal and has high electron emission efficiency, so that it is an excellent material as an element for constituting the electron emitting portion of the field emission device provided in the display. Further, the active matrix of a transistor is also one of products in fields where the application of the carbon nanotube structure is expected. That is, it is said that a transistor of a smaller size and lower power consumption can be obtained by applying the carbon nanotube structure to the active matrix that is an electron path in the transistor.

The carbon nanotube structures are manufactured at present by a chemical vapor deposition method (CVD method), or by a physical vapor deposition method (PVD method) such as an arc discharge method or a laser abrasion method.

Conventionally, a field emission device constituted of carbon nanotube structures is manufactured by the steps of;
(1) forming a cathode electrode on a supporting member,
(2) forming an insulating layer on the entire surface,
(3) forming a gate electrode on the insulating layer,
(4) forming an opening portion at least in the insulating layer, to expose the cathode electrode in the bottom portion of the opening portion, and
(5) forming an electron emitting portion made of the carbon nanotube structures on the exposed cathode electrode.

The opening portion formed in the above step (4) generally has a diameter in the order of 10⁻⁶ m. Therefore, the uniform formation of the carbon nanotube structures on the cathode electrode exposed in the bottom portions of the opening portions by a plasma CVD method in the above step (5) involves great difficulties when the display has a large area, and there are some cases where already formed field emission device elements such as the gate electrodes, opening portions and cathode electrodes are damaged. When a less expensive glass substrate is used as a supporting member for forming the carbon nanotube structures by a plasma CVD method, it is required to employ a very low temperature (550 °C or lower) as a forming temperature. At such a low forming temperature, however, the crystallinity of the carbon nanotube structure is degraded. For employing a high forming temperature, it is required to use a supporting member durable against a high temperature such as a ceramic, which leads to an increase in cost. Further, there is another problem that the growth of the carbon nanotube structure is impaired by the influence of a gas that is released from the insulating layer during the formation.

For avoiding the above problems, there is another method in which the above step (1) is followed by the formation of the electron emitting portion made of the carbon nanotube structures on the cathode electrode. Meanwhile, when carbon nanotube structures having excellent properties are formed by a plasma CVD method, it is required to employ a very high heating temperature over 550 °C as a supporting member heating temperature, and there is involved a problem that a less expensive glass substrate cannot be used. On the other hand, when an attempt is made to employ a low temperature of 550 °C or lower as a supporting member heating temperature so that a less expensive glass substrate can be used, formed carbon nanotube structures have low mechanical strength. As a result, in the above step (4) of forming an opening portion at least in the insulating layer, to expose the cathode electrode in the bottom portion of the opening portion, the carbon nanotube structures constituting the electron emitting portion may be damaged due to the formation of the opening portion.

With regard to the above step (5), there is also proposed a method in which the carbon nanotube structures are dispersed in a solvent together with an organic binder material or an inorganic binder material (for example, water glass), the dispersion is applied onto the entire surface by a spin coating method or the like, the solvent is removed, and the binder material is fired and cured. In the above method, however, it is required to increase the diameter of the opening portion and further to increase the thickness of the insulating layer for preventing the short-circuiting to be caused between the cathode electrode and the gate electrode due to the carbon nanotube structures in the opening portion. When the above measure is taken, however, there is caused a problem that it is difficult to form a high electric field intensity in the vicinity of the carbon nanotube structures and that the efficiency of electron emission from the carbon nanotube structures is hence decreased.

It is thinkable to employ a method in which the above step (1) is followed by dispersing the carbon nanotube structures in a solvent together with an organic or inorganic binder material, applying the dispersion onto the entire surface by a spin coating method or the like, removing the solvent, and firing and curing the binder material. In the above method, however, the carbon nanotube structures are entirely embedded in the binder material, so that there is caused a problem that the efficiency of electron emission from the carbon nanotube structures is decreased.

Further, a chemically stable oxide material such as SiO₂ can be used as a binder material. Since, however, it is an insulating material, it is difficult to establish an electron moving path between the cathode electrode and the electron emitting portion. For electron emission from the electron emitting portion, it is required to employ some means for establishing the electron moving path between the cathode electrode and the electron emitting portion.

The problems and various demands above can be summarized as follows.
(1) To cope with an increase in the area of the display.
(2) To prevent damage to be caused on field emission device elements such as a gate electrode, an opening portion, a cathode electrode, an electron emitting portion and the like.
(3) To decrease a temperature for the production process of the field emission device.
(4) To prevent a decrease in the efficiency of electron emission from the carbon nanotube structures.
(5) A method of fixing the carbon nanotube structures to a substratum (for example, cathode electrode).

It is therefore an object of the present invention to provide an electron emitting member and a manufacturing method thereof, a cold cathode field emission device and a manufacturing method thereof, and, a cold cathode field emission display and a manufacturing method thereof, which can overcome or cope with the above problems or demands (1) to (5), further, which have a structure in which the carbon nanotube structures for constituting an electron emitting portion or electron emitting member are not susceptible to damage, and further, which give high electron emission efficiency.

### DISCLOSURE OF THE INVENTION

An electron emitting member, provided by the present invention for achieving the above object, comprises a matrix, and carbon nanotube structures embedded in the matrix in a state where the top portion of each carbon nanotube structure is projected.

A manufacturing method of an electron emitting member according to a first aspect of the present invention for achieving the above object, comprises the steps of;
(a) forming, on a substratum, a composite layer having a constitution in which carbon nanotube structures are embedded in a matrix, and
(b) removing the matrix in the surface of the composite layer, to obtain an electron emitting member
in which the carbon nanotube structures are embedded in the matrix in a state where the top portion of each carbon nanotube structure is projected.

A manufacturing method of an electron emitting member according to a second aspect of the present invention for achieving the above object, comprises the steps of;
(a) applying, onto a substratum, a metal compound solution in which carbon nanotube structures are dispersed, and
(b) firing the metal compound, to obtain an electron emitting member in which the carbon nanotube structures are fixed to the surface of the substratum with a matrix containing a metal atom constituting the metal compound.

In the manufacturing method of an electron emitting member according to the second aspect of the present invention, there may be employed a constitution in which the step (a) is followed by drying the metal compound solution to form a metal compound layer, then, removing an unnecessary portion of the metal compound layer on the substratum, and then, the step (b) is carried out. Alternatively, the step (b) may be followed by removing an unnecessary portion of the electron emitting member on the substratum, or the metal compound solution may be applied only onto a desired region of the substratum in the step (a).

According to the electron emitting member of the present invention, or according to the manufacturing method of an electron emitting member according to the first or second aspect of the present invention, there can be obtained an electron emitting portion of a cold cathode field emission device, various electron beam sources typified by an electron beam source in an electronic gun to be incorporated into a cathode ray tube, and a fluorescent character display tube.

A cold cathode field emission device, according to a first aspect of the present invention for achieving the above object, comprises;
(A) a cathode electrode formed on a supporting member, and
(B) an electron emitting portion formed on the cathode electrode,
in which said electron emitting portion comprises a matrix, and carbon nanotube structures embedded in the matrix in a state where the top portion of each carbon nanotube structure is projected.

A so-called two-electrodes-type cold cathode field emission display, according to a first aspect of the present invention for achieving the above object, comprises a cathode panel having a plurality of cold cathode field emission devices and an anode panel having a phosphor layer and an anode electrode, said cathode panel and said anode panel being bonded to each other in their circumferential portions,
in which each cold cathode field emission device comprises;
(A) a cathode electrode formed on a supporting member, and
(B) an electron emitting portion formed on the cathode electrode, and
   said electron emitting portion comprises a matrix, and carbon nanotube structures embedded in the matrix in a state where the top portion of each carbon nanotube structure is projected.

A cold cathode field emission device, according to a second aspect of the present invention for achieving the above object, comprises;
(A) a cathode electrode formed on a supporting member,
(B) an insulating layer formed on the supporting member and the cathode electrode,
(C) a gate electrode formed on the insulating layer,
(D) an opening portion formed through the gate electrode and the insulating layer, and
(E) an electron emitting portion exposed in the bottom portion of the opening portion,
in which said electron emitting portion comprises a matrix, and carbon nanotube structures embedded in the matrix in a state where the top portion of each carbon nanotube structure is projected.

A so-called three-electrodes-type cold cathode field emission display, according to a second aspect of the present invention for achieving the above object, comprises a cathode panel having a plurality of cold cathode field emission devices and an anode panel having a phosphor layer and an anode electrode, said cathode panel and said anode panel being bonded to each other in their circumferential portions,
in which each cold cathode field emission device comprises;
(A) a cathode electrode formed on a supporting member,
(B) an insulating layer formed on the supporting member and the cathode electrode,
(C) a gate electrode formed on the insulating layer,
(D) an opening portion formed through the gate electrode and the insulating layer, and
(E) an electron emitting portion exposed in the bottom portion of the opening portion, and
   said electron emitting portion comprises a matrix, and carbon nanotube structures embedded in the matrix in a state where the top portion of each carbon nanotube structure is projected.

A cold cathode field emission device, according to a third aspect of the present invention for achieving the above object, comprises;
(A) a cathode electrode formed on a supporting member, and
(B) an electron emitting portion formed on the cathode electrode,
in which said electron emitting portion comprises a matrix, and carbon nanotube structures embedded in the matrix in a state where the top portion of each carbon nanotube structure is projected, and
the matrix comprises a metal oxide.

A cold cathode field emission display, according to a third aspect of the present invention for achieving the above object, comprises a cathode panel having a plurality of cold cathode field emission devices and an anode panel having a phosphor layer and an anode electrode, said cathode panel and said anode panel being bonded to each other in their circumferential portions,
in which each cold cathode field emission device comprises;
(A) a cathode electrode formed on a supporting member, and
(B) an electron emitting portion formed on the cathode electrode, and
   said electron emitting portion comprises a matrix, and carbon nanotube structures embedded in the matrix in a state where the top portion of each carbon nanotube structure is projected, and
   the matrix comprises a metal oxide.

A cold cathode field emission device, according to a fourth aspect of the present invention for achieving the above object, comprises;
(A) a cathode electrode formed on a supporting member,
(B) an insulating layer formed on the supporting member and the cathode electrode,
(C) a gate electrode formed on the insulating layer,
(D) an opening portion formed through the gate electrode and the insulating layer, and
(E) an electron emitting portion exposed in the bottom portion of the opening portion,
in which said electron emitting portion comprises a matrix, and carbon nanotube structures embedded in the matrix in a state where the top portion of each carbon nanotube structure is projected, and
the matrix comprises a metal oxide.

A cold cathode field emission display, according to a fourth aspect of the present invention for achieving the above object, comprises a cathode panel having a plurality of cold cathode field emission devices and an anode panel having a phosphor layer and an anode electrode, said cathode panel and said anode panel being bonded to each other in their circumferential portions,
in which each cold cathode field emission device comprises;
(A) a cathode electrode formed on a supporting member,
(B) an insulating layer formed on the supporting member and the cathode electrode,
(C) a gate electrode formed on the insulating layer,
(D) an opening portion formed through the gate electrode and the insulating layer, and
(E) an electron emitting portion exposed in the bottom portion of the opening portion, and
   said electron emitting portion comprises a matrix, and carbon nanotube structures embedded in the matrix in a state where the top portion of each carbon nanotube structure is projected, and
   the matrix comprises a metal oxide.

In the cold cathode field emission device according to the second or fourth aspect of the present invention, or in the cold cathode field emission device provided in the cold cathode field emission display according to the second or fourth aspect of the present invention, the insulating layer is formed on the supporting member and the cathode electrode, and the insulating layer further covers the composite layer or the electron emitting portion depending upon forming embodiments of the composite layer or the electron emitting portion. That is, when the composite layer or the electron emitting portion is formed on a portion of the cathode electrode corresponding to the bottom portion of the opening portion, the insulating layer covers the supporting member and the cathode electrode. Except for such a case, the insulating layer covers the supporting member, the cathode electrode and the composite layer or the electron emitting portion.

The manufacturing method of a cold cathode field emission device, according to a first aspect of the present invention for achieving the above object, is a manufacturing method of a cold cathode field emission device comprising;
(A) a cathode electrode formed on a supporting member, and
(B) an electron emitting portion formed on the cathode electrode,
   said manufacturing method comprising the steps of;
   (a) forming, on a predetermined region of the cathode electrode formed on the supporting member, a composite layer having a constitution in which carbon nanotube structures are embedded in a matrix, and
   (b) removing the matrix in the surface of the composite layer, to obtain the electron emitting portion
in which the carbon nanotube structures are embedded in the matrix in a state where the top portion of each carbon nanotube structure is projected.

The manufacturing method of a cold cathode field emission display, according to a first aspect of the present invention for achieving the above object, is a manufacturing method of a so-called two-electrodes-type cold cathode field emission display in which a cathode panel having a plurality of cold cathode field emission devices and an anode panel having a phosphor layer and an anode electrode are bonded to each other in their circumferential portions,
each cold cathode field emission device comprising;
(A) a cathode electrode formed on a supporting member, and
(B) an electron emitting portion formed on the cathode electrode,
   said manufacturing method including the steps of;
   (a) forming, on a predetermined region of the cathode electrode formed on the supporting member, a composite layer having a constitution in which carbon nanotube structures are embedded in a matrix, and
   (b) removing the matrix in the surface of the composite layer, to obtain the electron emitting portion
in which the carbon nanotube structures are embedded in the matrix in a state where the top portion of each carbon nanotube structure is projected, thereby to form the cold cathode field emission device.

The manufacturing method of a cold cathode field emission device, according to a second aspect of the present invention for achieving the above object, is a manufacturing method of a cold cathode field emission device comprising;
(A) a cathode electrode formed on a supporting member,
(B) an insulating layer formed on the supporting member and the cathode electrode,
(C) a gate electrode formed on the insulating layer,
(D) an opening portion formed through the gate electrode and the insulating layer, and
(E) an electron emitting portion exposed in the bottom portion of the opening portion,
   said manufacturing method comprising the steps of;
   (a) forming, on a predetermined region of the cathode electrode formed on the supporting member, a composite layer having a constitution in which carbon nanotube structures are embedded in a matrix,
   (b) forming the insulating layer on the entire surface,
   (c) forming the gate electrode on the insulating layer,
   (d) forming the opening portion at least through the insulating layer, to expose the composite layer in the bottom portion of the opening portion, and
   (e) removing the matrix in the surface of the exposed composite layer, to obtain the electron emitting portion in which the carbon nanotube structures are embedded in the matrix in a state where the top portion of each carbon nanotube structure is projected.

The manufacturing method of a cold cathode field emission display, according to a second aspect of the present invention for achieving the above object, is a manufacturing method of a so-called three-electrodes-type cold cathode field emission display in which a cathode panel having a plurality of cold cathode field emission devices and an anode panel having a phosphor layer and an anode electrode are bonded to each other in their circumferential portion,
each cold cathode field emission device comprising;
(A) a cathode electrode formed on a supporting member,
(B) an insulating layer formed on the supporting member and the cathode electrode,
(C) a gate electrode formed on the insulating layer,
(D) an opening portion formed through the gate electrode and the insulating layer, and
(E) an electron emitting portion exposed in the bottom portion of the opening portion,
   said manufacturing method including the steps of;
   (a) forming, on a predetermined region of the cathode electrode formed on the supporting member, a composite layer having a constitution in which carbon nanotube structures are embedded in a matrix,
   (b) forming the insulating layer on the entire surface,
   (c) forming the gate electrode on the insulating layer,
   (d) forming the opening portion at least through the insulating layer, to expose the composite layer in the bottom portion of the opening portion, and
   (e) removing the matrix in the surface of the exposed composite layer, to obtain the electron emitting portion in which the carbon nanotube structures are embedded in the matrix in a state where the top portion of each carbon nanotube structure is projected, thereby to form the cold cathode field emission device.

In the manufacturing method of a cold cathode field emission device according to the second aspect of the present invention, or in the manufacturing method of a cold cathode field emission display according to the second aspect of the present invention, a buffer layer may be formed on the composite layer after the formation of the composite layer on the predetermined region of the cathode electrode. When the opening portion is formed at least through the insulating layer, the completion of formation of the opening portion can be reliably detected with the formation of the buffer layer. The material for constituting the buffer layer can be selected from materials having an etching selectivity to the material for constituting the insulating layer, and it may be any material selected from electrically conductive materials and insulating materials.

In the manufacturing method of a cold cathode field emission device according to the second aspect of the present invention, or in the manufacturing method of a cold cathode field emission display according to the second aspect of the present invention, the composite layer is formed on the predetermined region of the cathode electrode formed on the supporting member. In this case, the composite layer may be formed on that portion of the cathode electrode which corresponds to the bottom portion of the opening portion. Alternatively, the composite layer may be formed on that portion of the cathode electrode which occupies a region (called an electron emitting region) where the projection image of the cathode electrode in the form of a strip and the projection image of the gate electrode in the form of a strip overlap. Alternatively, the composite layer may be formed on the entire cathode electrode in the form of a strip. Further, when the composite layer is electrically insulating, it may be formed on the cathode electrode and the supporting member. When the composite layer is formed only on that portion of the cathode electrode which corresponds to the bottom portion of the opening portion, the carbon nanotube structures do not at all bridge adjacent opening portions, so that the occurrence of current leakage can be reliably prevented.

The manufacturing method of a cold cathode field emission device, according to a third aspect of the present invention for achieving the above object, is a manufacturing method of a cold cathode field emission device comprising;
(A) a cathode electrode formed on a supporting member, and
(B) an electron emitting portion formed on the cathode electrode,
   said manufacturing method comprising the steps of;
   (a) forming the cathode electrode on the supporting member,
   (b) applying, onto the cathode electrode, a metal compound solution in which carbon nanotube structures are dispersed, and
   (c) firing the metal compound, to obtain the electron emitting portion in which the carbon nanotube structures are fixed to the surface of the cathode electrode with a matrix containing a metal atom constituting the metal compound.

The manufacturing method of a cold cathode field emission display, according to a third aspect of the present invention for achieving the above object, is a manufacturing method of a so-called two-electrodes-type cold cathode field emission display in which a cathode panel having a plurality of cold cathode field emission devices and an anode panel having a phosphor layer and an anode electrode are bonded to each other in their circumferential portions,
each cold cathode field emission device comprising;
(A) a cathode electrode formed on a supporting member, and
(B) an electron emitting portion formed on the cathode electrode,
   said manufacturing method including the steps of;
   (a) forming the cathode electrode on the supporting member,
   (b) applying, onto the cathode electrode, a metal compound solution in which carbon nanotube structures are dispersed, and
   (c) firing the metal compound, to obtain the electron emitting portion in which the carbon nanotube structures are fixed to the surface of the cathode electrode with a matrix containing a metal atom constituting the metal compound, thereby to form the cold cathode field emission device.

In the manufacturing method of a cold cathode field emission device according to the third aspect of the present invention, or in the manufacturing method of a cold cathode field emission display according to the third aspect of the present invention, there may be employed a constitution in which the step (b) is followed by drying the metal compound solution to form a metal compound layer, then, removing an unnecessary portion of the metal compound layer on the cathode electrode, and then, the step (c) is carried out. Alternatively, the step (c) may be followed by removing an unnecessary portion of the electron emitting portion on the cathode electrode, or the metal compound solution may be applied only onto a desired region of the cathode electrode in the step (b).

The manufacturing method of a cold cathode field emission device, according to a fourth aspect of the present invention for achieving the above object, is a manufacturing method of a cold cathode field emission device comprising;
(A) a cathode electrode formed on a supporting member,
(B) an insulating layer formed on the supporting member and the cathode electrode,
(C) a gate electrode formed on the insulating layer,
(D) an opening portion formed through the gate electrode and the insulating layer, and
(E) an electron emitting portion exposed in the bottom portion of the opening portion,
   said manufacturing method comprising the steps of;
   (a) forming the cathode electrode on the supporting member,
   (b) applying, onto the cathode electrode, a metal compound solution in which carbon nanotube structures are dispersed,
   (c) firing the metal compound, to obtain the electron emitting portion in which the carbon nanotube structures are fixed to the surface of the cathode electrode with a matrix containing a metal atom constituting the metal compound,
   (d) forming the insulating layer on the entire surface,
   (e) forming the gate electrode on the insulating layer, and
   (f) forming the opening portion at least through the insulating layer, to expose the electron emitting portion in the bottom portion of the opening portion.

The manufacturing method of a cold cathode field emission display, according to a fourth aspect of the present invention for achieving the above object, is a manufacturing method of a so-called three-electrodes-type cold cathode field emission display in which a cathode panel having a plurality of cold cathode field emission devices and an anode panel having a phosphor layer and an anode electrode are bonded to each other in their circumferential portion,
each cold cathode field emission device comprising;
(A) a cathode electrode formed on a supporting member,
(B) an insulating layer formed on the supporting member and the cathode electrode,
(C) a gate electrode formed on the insulating layer,
(D) an opening portion formed through the gate electrode and the insulating layer, and
(E) an electron emitting portion exposed in the bottom portion of the opening portion,
   said manufacturing method including the steps of;
   (a) forming the cathode electrode on the supporting member,
   (b) applying, onto the cathode electrode, a metal compound solution in which carbon nanotube structures are dispersed,
   (c) firing the metal compound, to obtain the electron emitting portion in which the carbon nanotube structures are fixed to the surface of the cathode electrode with a matrix containing a metal atom constituting the metal compound,
   (d) forming the insulating layer on the entire surface,
   (e) forming the gate electrode on the insulating layer, and
   (f) forming the opening portion at least through the insulating layer, to expose the electron emitting portion in the bottom portion of the opening portion, thereby to form the cold cathode field emission device.

In the manufacturing method of an electron emitting member according to the first aspect of the present invention, in the manufacturing method of a cold cathode field emission device according to the first or second aspect of the present invention, or in the manufacturing method of a cold cathode field emission display according to the first or second aspect of the present invention, the method of forming, on the substratum or a predetermined region of the cathode electrode, a composite layer having a constitution in which carbon nanotube structures are embedded in a matrix, specifically, includes the following methods.

### [First manufacturing method]

A method in which a dispersion of the carbon nanotube structures in an organic solvent is applied onto a predetermined region of the cathode electrode or substratum, the organic solvent is removed, and then, the carbon nanotube structures are covered with a diamond-like amorphous carbon (more specifically, a method in which the carbon nanotube structures are dispersed in an organic solvent such as toluene or alcohol, the dispersion is applied onto the substratum or a predetermined region of the cathode electrode by a spin coating method or a spray method such as a nanospray method or an atomic spray method, the organic solvent is removed, and then, the carbon nanotube structures are covered with a diamond-like amorphous carbon).

### [Second manufacturing method]

A method in which the carbon nanotube structures are formed on a predetermined region of the cathode electrode or substratum by any one of various CVD methods such as a plasma CVD method, a laser CVD method, a thermal CVD method, a gaseous phase synthetic method, a gaseous phase growth method and the like, and then, the carbon nanotube structures are covered with a diamond-like amorphous carbon.

### [Third manufacturing method]

A method in which a dispersion of the carbon nanotube structures in a binder material is, for example, applied onto a predetermined region of the cathode electrode or substratum, and then, the binder material is fired or cured, thereby to form the composite layer having a constitution in which the carbon nanotube structures are embedded in the matrix composed of the binder material (more specifically, a method in which the carbon nanotube structures are dispersed in an organic binder material such as an epoxy resin or an acrylic resin or an inorganic binder material such as water glass, the dispersion is, for example, applied onto the substratum or a predetermined region of the cathode electrode, the organic solvent is removed, and then, the binder material is fired and cured). As an application method, for example, a screen printing method may be employed.

In the first or third manufacturing method, in the manufacturing method of an electron emitting member according to the second aspect of the present invention, in the manufacturing method of a cold cathode field emission device according to the third or fourth aspect of the present invention, or in the manufacturing method of a cold cathode field emission display according to the third or fourth aspect of the present invention, in some cases, a powder substance or particulate substance such as silica having an average particle diameter of, for example, 10 nm to 1 µm, nickel having an average particle diameter of, for example, 5 nm to 3 µm or silver may be added to the dispersion of the carbon nanotube structures in the organic solvent, the dispersion of the carbon nanotube structures in the binder material or the metal compound solution. In this case, the carbon nanotube structures are arranged on the substratum or cathode electrode with an angle to the substratum or cathode electrode so that the carbon nanotube structures lean against the powder or particulate substance. A mixture of different powder or particulate substances such as silica and silver may be used. For increasing the thickness of the matrix, an additive such as carbon black may be added to the dispersion of the carbon nanotube structures in the organic solvent, the dispersion of the carbon nanotube structures in the binder material or the metal compound solution.

In the electron emitting member of the present invention, the manufacturing method of an electron emitting member according to the first or second aspect of the present invention, the cold cathode field emission device according to any one of the first to fourth aspects of the present invention, the manufacturing method of a cold cathode field emission device according to any one of the first to fourth aspects of the present invention, the cold cathode field emission display according to any one of the first to fourth aspects of the present invention, or the manufacturing method of a cold cathode field emission display according to any one of the first to fourth aspects of the present invention (these will be generally and simply referred to as "the present invention" hereinafter), the carbon nanotube structure may be constituted of a carbon nanotube and/or a carbon nanofiber. Alternatively, the carbon nanotube structure may be constituted of a carbon nanotube structure and/or a carbon nanofiber containing a magnetic material (such as iron, cobalt or nickel). Alternatively, the carbon nanotube structure may be constituted of a carbon nanotube structure and/or a carbon nanofiber having a surface on which a magnetic material layer is formed. In the present invention, the electron emitting member or electron emitting portion may be constituted of carbon nanotubes, may be constituted of carbon nanofibers, or may be constituted of a mixture of carbon nanotubes and carbon nanofibers.

In the manufacturing method of an electron emitting member according to the first aspect of the present invention, in the second manufacturing method of the manufacturing method of a cold cathode field emission device according to the first or second aspect of the present invention, or in the second manufacturing method of the manufacturing method of a cold cathode field emission display according to the first or second aspect of the present invention, or further, in the electron emitting member of the present invention, the cold cathode field emission device according to the first or second aspect of the present invention or the cold cathode field emission display according to the first or second aspect of the present invention manufactured by these manufacturing methods, the carbon nanotube and carbon nanofiber may have the form of a powder or of a thin film, macroscopically, and in some cases, may have the form of a cone. In the manufacturing method of an electron emitting member according to the first aspect of the present invention, in the first or third manufacturing method of the manufacturing method of a cold cathode field emission device according to the first or second aspect of the present invention, or in the first or third manufacturing method of the manufacturing method of a cold cathode field emission display according to the first or second aspect of the present invention, or further, in the manufacturing method of an electron emitting member according to the second aspect of the present invention, in the manufacturing method of a cold cathode field emission device according to the third or fourth aspect of the present invention, or in the manufacturing method of a cold cathode field emission display according to the third or fourth aspect of the present invention, or further, in the electron emitting member of the present invention, the cold cathode field emission device according to the third or fourth aspect of the present invention or the cold cathode field emission display according to the third or fourth aspect of the present invention manufactured by these manufacturing methods, preferably, the carbon nanotube and carbon nanofiber may have the form of a powder, macroscopically. The manufacturing method of carbon nanotubes or carbon nanofibers includes a PVD method as a known arc discharge method and a known laser abrasion method; and any one of various CVD methods such as a plasma CVD method, a laser CVD method, a thermal CVD method, a gaseous phase synthetic method and a gaseous phase growth method.

The carbon nanotube and the carbon nanofiber differ in crystallinity. Generally, carbon atoms having sp² bond form a six-membered ring made of six carbon atoms, and such six-membered rings gather to form a carbon graphite sheet. A carbon nanotube has a tube structure in which the above carbon graphite sheet is rolled up. The carbon nanotube may be a single-wall carbon nanotube having a structure in which one layer of the carbon graphite sheet is rolled up, or may be a multi-wall carbon nanotube having a structure in which two or more layers of the carbon graphite sheets are rolled up. A carbon nanofiber is a fiber in which a carbon graphite sheet is not rolled up and fragments of carbon graphite are stacked so as to form a fiber state. While the carbon nanotube or carbon nanofiber and a carbon whisker are not apparently distinguishable, the carbon nanotube or carbon nanofiber generally has a diameter of 1 µm or less, for example, approximately 1 nm to 300 nm.

When the carbon nanotube structure is constituted of a carbon nanotube structure and/or a carbon nanofiber containing a magnetic material (such as iron, cobalt or nickel) or is constituted of a carbon nanotube structure and/or a carbon nanofiber having a surface on which a magnetic material layer is formed, after the step (a) or step (b) in the manufacturing method of an electron emitting member according to the second aspect of the present invention, after the step (b) or step (c) in the manufacturing method of a cold cathode field emission device or a cold cathode field emission display according to the third aspect of the present invention, or after the step (b), step (c) or step (f) in the manufacturing method of a cold cathode field emission device or a cold cathode field emission display according to the fourth aspect of the present invention, preferably, the substratum or supporting member is disposed in a magnetic field to align the carbon nanotube structures. In this manner, the top portion of the carbon nanotube structure can be aligned in the direction closest to the normal line direction of the substratum or supporting member. When the substratum or supporting member is disposed in a magnetic field in a state where the carbon nanotube structures are embedded in the matrix, the top portion of the carbon nanotube structure projected from the matrix can be aligned. In the manufacturing method of an electron emitting member according to the first aspect of the present invention, or in the manufacturing method of a cold cathode field emission device or a cold cathode field emission display according to the first or second aspect of the present invention, when the composite layer is formed or after the composite layer is formed, or after the electron emitting member or the electron emitting portion is formed, preferably, the substratum or supporting member is disposed in a magnetic field to align the carbon nanotube structures in the direction closer to the normal line direction of the substratum or supporting member. The maximum magnetic flux density in the magnetic field is 0.001 to 100 tesla, preferably 0.1 to 5 tesla.

The carbon nanotubes and/or carbon nanofibers containing a magnetic material (for example, iron, cobalt, nickel or the like) are produced since the magnetic material, which works as a catalyst, is taken into the inside of each of the carbon nanotubes and/or carbon nanofibers on the production of the carbon nanotubes and/or carbon nanofibers. Further, the carbon nanotubes and/or carbon nanofibers having a magnetic material layer composed of iron, cobalt, nickel, zinc, manganese, barium, strontium, ferrite or the like on the surface of each can be obtained by forming the magnetic material layer on the surface of each of the carbon nanotubes and/or carbon nanofibers according to an electro less plating method, an electric plating method, a physical vapor deposition method (PVD method) such as a vapor deposition method or a sputtering method, or a chemical vapor deposition method (CVD method).

In the above second manufacturing method, when the carbon nanotubes or carbon nanofibers are formed on the substratum or cathode electrode by a plasma CVD method, a hydrocarbon gas or a hydrocarbon gas with hydrogen gas is preferably used as a source gas for the plasma CVD method. The hydrocarbon gas includes hydrocarbon gases such as methane (CH₄), ethane (C₂H₆), propane (C₃H₈), butane (C₄H₁₀), ethylene (C₂H₄), acetylene (C₂H₂), mixtures of these gases. Further, there may be used a gas prepared by gasifying methanol, ethanol, acetone, benzene, toluene, xylene, naphthalene or the like. Further, a rare gas such as helium (He), argon (Ar) or the like may be introduced for stabilizing discharging and for promoting plasma dissociation, or a doping gas such as nitrogen gas and ammonium gas may be mixed with the hydrocarbon gas.

When the carbon nanotubes are formed by a plasma CVD method in the above second manufacturing method, preferably, the carbon nanotubes are formed by a plasma CVD method under a plasma density condition of 1 x 10¹²/cm³ or more, preferably, 1 x 10¹⁴/cm³ or more, in a state where a bias voltage is applied to the supporting member. Otherwise, preferably, the carbon nanotubes are formed by a plasma CVD method at an electron temperature of 1 eV to 15 eV, preferably, 5 eV to 15 eV, and under an ion current density of 0.1 mA/cm² to 30 mA/cm², preferably 5 mA/cm² to 30 mA/cm², in a state where a bias voltage is applied to the supporting member. The plasma CVD method includes plasma CVD methods such as a helicon wave plasma CVD method, an inductively coupled plasma CVD method, an electron cyclotron resonance plasma CVD method, a capacitively coupled plasma CVD method and a diode parallel plate plasma enhanced CVD system.

In the above second manufacturing method, when the carbon nanotubes or carbon nanofibers are formed by a plasma CVD method, preferably, a selective growth region is formed on the substratum or formed on the cathode electrode of the cold cathode field emission device. Such a selective growth region is composed of at least one metal selected from the group consisting of nickel (Ni), molybdenum (Mo), titanium (Ti), chromium (Cr), cobalt (Co), tungsten (W), zirconium (Zr), tantalum (Ta), iron (Fe), copper (Cu), platinum (Pt), zinc (Zn), cadmium (Cd), germanium (Ge), tin (Sn), lead (Pb), bismuth (Bi), silver (Ag), gold (Au), indium (In) and thallium (Tl), or composed of an alloy containing any one of these elements, or composed of an organometal. Further, besides the above metals, there can be used a metal that exhibits catalysis in an atmosphere employed for forming (synthesizing) the electron emitting member or electron emitting portion. In some cases, a proper material is selected from the above materials, and the substratum or the cathode electrode of the cold cathode field emission device can be constituted of such a material.

The selective growth region may be constituted of a metal thin layer. The method for forming the metal thin layer is selected, for example, from a physical vapor deposition method, a plating method (including an electroplating method and an electro less plating method), and a chemical vapor deposition method. The physical vapor deposition method includes (1) vacuum deposition methods such as an electron beam heating method, a resistance heating method and a flash deposition method, (2) a plasma deposition method, (3) sputtering methods such as a bipolar sputtering method, a DC sputtering method, a DC magnetron sputtering method, a high-frequency sputtering method, a magnetron sputtering method, an ion beam sputtering method and a bias sputtering method, and (4) ion plating methods such as a DC (direct current) method, an RF method, a multi-cathode method, an activating reaction method, an electric field deposition method, a high-frequency ion plating method and a reactive ion-plating method.

Alternatively, the method for forming the selective growth region includes, for example, a method in which, in a state where a region of the cathode electrode or substratum other than the region where the selective growth region is to be formed is covered with a proper material (for example, a mask layer), a layer composed of a solvent and the metal particles is formed on the surface of a portion of the cathode electrode or substratum where the selective growth region is to be formed, and then, the solvent is removed while retaining the metal particles. Alternatively, the method for forming the selective growth region includes, for example, a method in which, in a state where a region of the cathode electrode or substratum other than the region where the selective growth region is to be formed is covered with a proper material (for example, a mask layer), metal compound particles containing metal atoms constituting the metal particles are allowed to adhere onto the surface of the cathode electrode or substratum, and then, the metal compound particles are heated to be decomposed, whereby the selective growth region (a kind of flock of the metal particles) is formed on the cathode electrode or substratum. In this case, specifically, a layer composed of a solvent and metal compound particles is formed on the surface of a portion of the cathode electrode or substratum where the selective growth region is to be formed, and then, the solvent is removed while retaining the metal compound particles. The metal compound particles are preferably composed of at least one material selected from the group consisting of halides (for example, iodides, chlorides, bromides, etc.), oxides and hydroxides of the metal and organic metal compounds, which metal constitutes the selective growth region. In the above methods, the material (for example, mask layer) covering the region of the cathode electrode or substratum other than the region where the selective growth region is to be formed is removed at a proper stage.

Alternatively, the selective growth region may be constituted of an organometallic compound thin layer. In this case, the organometallic compound thin layer is preferably composed of an organometallic compound containing at least one element selected from the group consisting of zinc (zn), tin (Sn), aluminum (Al), lead (Pb), nickel (Ni) and cobalt (Co). Further, it is preferably composed of a complex compound. Examples of the ligand constituting the above complex compound include acetylacetone, hexafluoroacetylacetone, dipivaloylmethane and cyclopentadienyl. The organometallic compound thin layer formed may contain part of a decomposition product from the organometallic compound. The step of forming the selective growth region constituted of the organometallic compound thin layer can be the step of forming a layer composed of an organometallic compound solution on a portion of the cathode electrode or substratum where the selective growth region is to be formed, or the step of sublimating an organometallic compound to deposit it on a portion of the cathode electrode or substratum where the selective growth region is to be formed.

In the electron emitting member of the present invention, in the manufacturing method of an electron emitting member according to the first aspect of the present invention, in the cold cathode field emission device according to the first or second aspect of the present invention, in the manufacturing method of a cold cathode field emission device according to the first or second aspect of the present invention, in the cold cathode field emission display according to the first or second aspect of the present invention, or in the manufacturing method of a cold cathode field emission display according to the first or second aspect of the present invention, an organic binder material such as an epoxy resin or an acrylic resin or an inorganic binder material such as water glass can be used for the matrix (also called a parent material a base material) (in the above third manufacturing method), however, preferably, a diamond-like amorphous carbon (DLC) can be used for the matrix (in the above first or second manufacturing method).

The method of forming the diamond-like amorphous carbon can be selected not only from CVD methods but also from various PVD methods such as a cathodiarc carbon method (for example, see "Properties of filtered-ion-beam-deposited diamond-like carbon as a function of ion energy", P. J. Fallen, et al., Phys. Rev. B 48 (1993), pp 4777-4782), a laser abrasion method and a sputtering method. The diamond-like amorphous carbon may contain hydrogen, or may be doped with nitrogen, boron, phosphorus or the like.

The above diamond-like amorphous carbon preferably has a peak of half-value width of 50 cm⁻¹ or more in the wave number range of 1400 to 1630 cm⁻¹ in Raman spectrum using a laser beam having a wavelength of 514.5 nm. When the peak is present on a higher wave number side than 1480 cm⁻¹, another peak may be present at a wave number of 1330 to 1400 cm⁻¹. The diamond-like amorphous carbon includes not only amorphous carbon having many sp³ bonds (specifically, 20 to 90 %) that are the same bonds as those of general diamond but also cluster carbon. For the cluster carbon, for example, see "Generation and deposition of fullerene- and nanotube-rich carbon thin films", M. Chhowalla, et al., Phil. Mag. Letts, 75 (1997), pp 329-335.

In the electron emitting member, the matrix can be constituted of a metal oxide. Further, in the electron emitting member, in the cold cathode field emission device according to the third or fourth aspect of the present invention, or the cold cathode field emission display according to the third or fourth aspect of the present invention, it is preferred to obtain the matrix by firing of the metal compound. The metal compound preferably includes an organometal compound, an organic acid metal compound, and metal salts (for example, chloride, nitrate and acetate). The matrix can be constituted of tin oxide, indium oxide, indium-tin oxide, zinc oxide, antimony oxide or antimony-tin oxide. The matrix preferably has a volume resistivity of 1 x 10⁻⁹ Ω·m to 5 x 10⁸ Ω·m, more preferably, 1 x 10⁻⁸ Ω·m to 5 x 10² Ω·m. After the firing, there can be obtained a state where part of each carbon nanotube structure is embedded in the matrix, or there can be obtained a state where the entire portion of each carbon nanotube structure is embedded in the matrix. In the latter case, it is required to remove part of the matrix. The matrix preferably has an average thickness of, for example, 5 x 10⁻⁸ m to 1 x 10⁻⁴ m. Desirably, the projection amount of the top portion of the carbon nanotube structure is, for example, 1.5 times as large as the diameter of the carbon nanotube structure.

After the step (b) in the manufacturing method of an electron emitting member according to the second aspect of the present invention, after the step (c) in the manufacturing method of a cold cathode field emission device according to the third aspect of the present invention, or, after the step (f) in the manufacturing method of a cold cathode field emission device according to the fourth aspect of the present invention, preferably, part of the matrix is removed to obtain the carbon nanotube structures in a state where the top portion of each carbon nanotube structure is projected from the matrix, from the viewpoint of improvement of efficiency of emission of electrons from the carbon nanotube structure. Part of the matrix can be removed by a wet etching method or a dry etching method depending upon the material used for constituting the matrix. The degree of removal from the matrix can be determined on the basis of the property evaluation of electron emission from the electron emitting member or electron emitting portion. The matrix is preferably constituted of a metal oxide. More specifically, the matrix is preferably constituted of tin oxide, indium oxide, indium-tin oxide, zinc oxide, antimony oxide or antimony-tin oxide. The matrix preferably has a volume resistivity of 1 x 10⁻⁹ Ω·m to 5 x 10⁸ Ω·m, more preferably, 1 x 10⁻⁸ Ω·m to 5 x 10² Ω·m.

In the manufacturing method of an electron emitting member according to the second aspect of the present invention, in the manufacturing method of a cold cathode field emission device according to the third or fourth aspect of the present invention, or in the manufacturing method of a cold cathode field emission display according to the third or fourth aspect of the present invention, the method for applying, onto the substratum or cathode electrode, the metal compound solution in which the carbon nanotube structures are dispersed includes a spray method, a spin coating method, a dipping method, a die quarter method and a screen printing method. Of these, a spray method is preferred in view of easiness in application.

The metal compound for constituting the metal compound solution includes, for example, an organometal compound, an organic acid metal compound, and metal salts (for example, chloride, nitrate and acetate). The organic acid metal compound solution is, for example, a solution prepared by dissolving an organic tin compound, an organic indium compound, an organic zinc compound or an organic antimony compound in an acid (for example, hydrochloric acid, nitric acid or sulfuric acid) and diluting the resultant solution with an organic solvent (for example, toluene, butyl acetate or isopropyl alcohol). Further, the organic metal compound solution is, for example, a solution prepared by dissolving an organic tin compound, an organic indium compound, an organic zinc compound or an organic antimony compound in an organic solvent (for example, toluene, butyl acetate or isopropyl alcohol). When the amount of the solution is 100 parts by weight, the solution preferably has a composition containing 0.001 to 20 parts by weight of the carbon nanotube structures and 0.1 to 10 parts by weight of the metal compound. The solution may contain a dispersing agent and a surfactant. From the viewpoint of increasing the thickness of the matrix, an additive such as carbon black or the like may be added to the metal compound solution. In some cases, the organic solvent may be replaced with water.

In the above step (a) in the manufacturing method of an electron emitting member according to the second aspect of the present invention, or in the above step (b) in the manufacturing method of a cold cathode field emission device according to the third or fourth aspect of the present invention, preferably, the substratum or supporting member is heated. While the substratum or supporting member is heated, the metal compound solution in which the carbon nanotube structures are dispersed is applied onto the substratum or cathode electrode, so that the applied solution starts to be dried before the carbon nanotube structures undergo self-leveling toward the horizontal direction on the surface of the substratum or cathode electrode. As a result, the carbon nanotube structures can be arranged on the surface of the substratum or cathode electrode in a state where the carbon nanotube structures are not horizontally positioned. Namely, the probability of the carbon nanotube structures being oriented in the direction closer to the normal line direction of the substratum or supporting member is increased. The temperature for heating the substratum or supporting member is preferably 40 to 250 °C, and more specifically, it is preferably the boiling point of the solvent contained in the metal compound solution or higher.

In the manufacturing method of a cold cathode field emission device according to the fourth aspect of the present invention, or in the manufacturing method of a cold cathode field emission display according to the fourth aspect of the present invention, there may be employed a constitution in which the step (b) is followed by drying the metal compound solution to form a metal compound layer, then, removing an unnecessary portion of the metal compound layer on the cathode electrode, and then, the step (c) is carried out. Alternatively, the step (c) may be followed by removing an unnecessary portion of the electron emitting portion on the cathode electrode, or the metal compound solution may be applied only onto a desired region of the cathode electrode in the step (b). The electron emitting portion can be left on that portion of the cathode electrode which corresponds to the bottom portion of the opening portion. Alternatively, the electron emitting portion may be left on that portion of the cathode electrode which occupies a region (called an electron emitting region) where the projection image of the cathode electrode in the form of a strip and the projection image of the gate electrode in the form of a strip overlap. Alternatively, the electron emitting portion may be left on the entire cathode electrode in the form of a strip. When the electron emitting portion is formed only on that portion of the cathode electrode which corresponds to the bottom portion of the opening portion, the carbon nanotube structures do not at all bridge adjacent opening portions, so that the occurrence of current leakage can be reliably prevented.

In the manufacturing method of an electron emitting member according to the second aspect of the present invention, in the manufacturing method of a cold cathode field emission device according to the third or fourth aspect of the present invention, or in the manufacturing method of a cold cathode field emission display according to the third or fourth aspect of the present invention, the temperature for firing the metal compound is preferably, for example, a temperature at which the metal salt is oxidized to form a metal oxide, or a temperature at which the organometal compound or organic acid metal compound is decomposed to form the matrix (for example, a metal oxide) containing metal atoms constituting the organometal compound or organic acid metal compound. The lower limit of the firing temperature can be a lower limit temperature at which, for example, the metal salt is oxidized to form a metal oxide, or a lower limit temperature at which the organometal compound or organic acid metal compound is decomposed to form the matrix (for example, a metal oxide) containing metal atoms constituting the organometal compound or organic acid metal compound. The upper limit of the firing temperature can be a temperature at which elements constituting the electron emitting member, the cold cathode field emission device or the cold cathode field emission display do not suffer any thermal damage and the like. More specifically, the firing temperature is 150 °C to 550 °C, preferably 200 °C to 550 °C, more preferably 300 °C to 500 °C.

The composite layer may have a thickness sufficient for embedding the carbon nanotube structures in the matrix. The matrix in the surface of the composite layer can be removed by a wet etching method or a dry etching method depending upon the material used for constituting the matrix. The degree of removal from the matrix in the surface of the composite layer can be determined on the basis of evaluation of the projection amount of top portion of the carbon nanotube structure by conducting various experiments. The matrix preferably has an average thickness of, for example, 5 x 10⁻⁸ m to 1 x 10⁻⁴ m. Desirably, the projection amount of the top portion of the carbon nanotube structure is, for example, 1.5 times as large as the diameter of the carbon nanotube structure.

In the present invention, preferably, the weight ratio of the carbon nanotube structures in the electron emitting member or electron emitting portion is 0.001 to 40 when the total weight of the carbon nanotube structures and the matrix is taken as 100.

In the manufacturing method of an electron emitting member of the present invention, in the manufacturing method of a cold cathode field emission device according to any one of the first to fourth aspects of the present invention, or in the manufacturing method of a cold cathode field emission display according to any one of the first to fourth aspects of the present invention, it is preferred to carry out a kind of an activation treatment (washing treatment) of the surface of the electron emitting member or electron emitting portion after the forming of the electron emitting member or electron emitting portion, since the efficiency of emission of electrons from the electron emitting member or electron emitting portion is further improved. The above activation treatment includes a plasma treatment in an atmosphere containing a gas such as hydrogen gas, ammonia gas, helium gas, argon gas, neon gas, methane gas, ethylene gas, acetylene gas or nitrogen gas and the like.

The material for constituting the substratum or the cathode electrode of cold cathode field emission device can be selected from metals such as tungsten (W), niobium (Nb), tantalum (Ta), molybdenum (Mo), chromium (Cr), aluminum (Al) and copper (Cu); alloys and compounds of these metals (for example, nitrides such as TiN and silicides such as WSi₂, MoSi₂, TiSi₂ and TaSi₂); semiconductors such as silicon (Si); and ITO (indium-tin oxide). The method for forming the cathode electrode includes deposition methods such as an electron beam deposition method and a hot filament deposition method, a sputtering method, a combination of a CVD method or an ion plating method with an etching method, a screen-printing method, a plating method and a lift-off method. When a screen-printing method or a plating method is employed, the cathode electrodes in the form of stripes can be directly formed.

A convexo-concave portion may be formed on the substratum or the surface of the cathode electrode of the cold cathode field emission device. In this manner, the probability of the top portion of the carbon nanotube structure projected from the matrix facing, for example, the anode electrode increases, so that the efficiency of electron emission can be further improved. The convexo-concave portion can be formed, for example, by dry-etching the substratum or the cathode electrode; by anodization; or by spraying spheres on the supporting member, forming the cathode electrode on the spheres and then removing the spheres, for example, by combustion of the spheres.

The material for constituting the gate electrode includes at least one metal selected from the group consisting of tungsten (W), niobium (Nb), tantalum (Ta), titanium (Ti), molybdenum (Mo), chromium (Cr), aluminum (Al), copper (Cu), gold (Au), silver (Ag), nickel (Ni), cobalt (Co), zirconium (Zr), iron (Fe), platinum (Pt) and zinc (Zn); alloys or compounds containing these metal elements (for example, nitrides such as TiN and silicides such as WSi₂, MoSi₂, TiSi₂ and TaSi₂); semiconductors such as silicon (Si); and electrically conductive metal oxides such as ITO (indium-tin oxide), indium oxide and zinc oxide. The gate electrode can be made by forming a thin layer made of the above material on the insulating layer by a known thin film forming method such as a CVD method, a sputtering method, a vapor deposition method, an ion plating method, an electrolytic plating method, an electro less plating method, a screen printing method, a laser abrasion method or a sol-gel method. When the thin film is formed on the entire surface of the insulating layer, the thin film is patterned by a known patterning method to form the gate electrode in the form of a stripe. The opening portion may be formed in the gate electrode after the gate electrode in the form of a strip is formed, or the opening portion may be formed concurrently with the formation of the gate electrode in the form of a stripe. When a patterned resist may be formed on the insulating layer in advance of the formation of the electrically conductive material layer for a gate electrode, the gate electrode can be formed by a lift-off method. Further, vapor deposition may be carried out using a mask having openings conforming to the gate electrodes, or screen printing may be carried out with a screen having such openings. In these cases, no patterning is required after the formation of the thin film. In the manufacturing method of a cold cathode field emission device according to the second or fourth aspect of the present invention, or in the manufacturing method of a cold cathode field emission display according to the second or fourth aspect of the present invention, the description of "forming the opening portion at least through the insulating layer" includes the above embodiment.

In the cold cathode field emission display of the present invention, the anode panel comprises a substrate, a phosphor layer and an anode electrode. The surface to be irradiated with electrons is constituted of the phosphor layer or the anode electrode depending upon the structure of the anode panel.

The material for constituting the anode electrode can be properly selected depending upon the constitution of the cold cathode field emission display. That is, when the cold cathode field emission display is a transmission type (the anode panel corresponds to a display screen), and when the anode electrode and the phosphor layer are stacked on the substrate in this order, not only the substrate but also the anode electrode itself is required to be transparent, and a transparent electrically conductive material such as indium-tin oxide (ITO) is used. When the cold cathode field emission display is a reflection type (the cathode panel corresponds to a display screen), or when the cold cathode field emission display is a transmission type and the phosphor layer and the anode electrode are stacked on the substrate in this order, ITO can be used, and besides ITO, the material for the anode electrode can be properly selected from materials discussed with respect of the cathode electrode or the gate electrode.

The fluorescent material for the phosphor layer can be selected from a fast-electron-excitation type fluorescent material or a slow-electron-excitation type fluorescent material. When the cold cathode field emission display is a monochrome display, it is not required to pattern the phosphor layer. When the cold cathode field emission display is a color display, preferably, the phosphor layers corresponding to three primary colors of red (R), green (G) and blue (B) patterned in the form of stripes or dots are alternately arranged. A black matrix may be filled in a gap between one patterned phosphor layer and another phosphor layer for improving a display screen in contrast.

Examples of the constitution of the anode electrode and the phosphor layer include (1) a constitution in which the anode electrode is formed on the substrate and the phosphor layer is formed on the anode electrode and (2) a constitution in which the phosphor layer is formed on the substrate and the anode electrode is formed on the phosphor layer. In the above constitution (1), a so-called metal back film may be formed on the phosphor layer. In the above constitution (2), the metal back layer may be formed on the anode electrode.

In the cold cathode field emission device according to the second or fourth aspect of the present invention, or in the cold cathode field emission device provided in the cold cathode field emission display according to the second or fourth aspect of the present invention, the plane form of the opening portion formed in the gate electrode (form obtained by cutting the opening portion with an imaginary plane in parallel with the surface of the supporting member) may have any arbitrary form such as a circle, an ellipse, a rectangular or square form, a polygon, a roundish rectangular or square form or a roundish polygon. The opening portion in the gate electrode can be formed, for example, by an isotropic etching method or a combination of anisotropic and isotropic etching methods. Alternatively, the opening portion can be directly formed depending upon the formation method of the gate electrode. The opening portion formed in the gate electrode is referred to as a first opening portion, and the opening portion formed in the insulating layer is referred to as a second opening portion, in some cases. There may be employed a constitution in which one first opening portion is formed in the gate electrode, one second opening portion communicating with the one first opening portion is formed in the insulating layer and one electron emitting portion is formed in the second opening portion formed in the insulating layer. Otherwise, there may be also employed a constitution in which a plurality of the first opening portions are formed in the gate electrode, one second opening portion communicating with such first opening portions is formed in the insulating layer and one or a plurality of the electron emitting portion(s) is/are formed in the second opening portion formed in the insulating layer.

As a material for constituting the insulating layer, SiO₂, SiN, SiON and SOG (spin on glass), low melting-point glass and a glass paste can be used alone or in combination. The insulating layer can be formed by a known method such as a CVD method, an application method, a sputtering method or a screen printing method. The second opening portion can be formed, for example, by an isotropic etching method or a combination of anisotropic and isotropic etching methods.

A resistance layer may be formed between the cathode electrode and the electron emitting portion. When the resistance layer is formed, stabilized operation and uniform electron-emitting property of the cold cathode field emission devices can be attained. The material for constituting the resistance layer includes carbon-containing materials such as silicon carbide (SiC) and SiCN; SiN; semiconductor materials such as amorphous silicon and the like; and refractory metal oxides such as ruthenium oxide (RuO₂), tantalum oxide and tantalum nitride. The resistance layer can be formed by a sputtering method, a CVD method or a screen-printing method. The resistance value of the resistance layer is approximately 1 x 10⁵ to 1 x 10⁷ Ω, preferably several MΩ.

The supporting member for constituting the cathode panel and the substrate for constituting the anode panel may be any so long as it has a surface constituted of an insulating member. The supporting member or the substrate includes a glass substrate, a glass substrate having an insulating film formed on its surface, a quartz substrate, a quartz substrate having an insulating film formed on its surface and a semiconductor substrate having an insulating film formed on its surface. From the viewpoint that the production cost is decreased, it is preferred to use a glass substrate or a glass substrate having an insulating film formed on its surface. It is required to form the substratum on an basic material, and the basic material can be selected from these materials and others such as a metal and a ceramic.

When the cathode panel and the anode panel are bonded in their circumferential portions, the bonding may be carried out with an bonding layer or with an bonding layer and a frame made of an insulating rigid material such as glass or ceramic. When the frame and the bonding layer are used in combination, the facing distance between the cathode panel and the anode panel can be adjusted to be longer by properly determining the height of the frame than that obtained when the bonding layer alone is used. While a frit glass is generally used as a material for the bonding layer, a so-called low-melting-point metal material having a melting point of approximately 120 to 400 °C may be used. The low-melting-point metal material includes In (indium; melting point 157 °C); an indium-gold low-melting-point alloy; tin (Sn)-containing high-temperature solders such as Sn₈₀Ag₂₀ (melting point 220 to 370 °C) and Sn₉₅Cu₅ (melting point 227 to 370 °C); lead (Pb)-containing high-temperature solders such as Pb_{97.5}Ag_{2.5} (melting point 304 °C), Pb_{94.5}Ag_{5.5} (melting point 304 - 365 °C) and Pb_{97.5}Ag_{1.5}Sn_{1.0} (melting point 309 °C); zinc (Zn)-containing high-temperature solders such as Zn₉₅Al₅ (melting point 380 °C); tin-lead-containing standard solders such as Sn₅Pb₉₅ (melting point 300 - 314 °C) and Sn₂Pb₉₈ (melting point 316 - 322 °C); and brazing materials such as Au₈₈Ga₁₂ (melting point 381 °C) (all of the above parenthesized values show atomic %).

When three members of the cathode panel, the anode panel and the frame are bonded, these three members may be bonded at the same time, or one of the cathode panel and the anode panel may be bonded to the frame at a first stage and then the other of the cathode panel and the anode panel may be bonded to the frame at a second stage. When bonding of the three members or bonding at the second stage is carried out in a high-vacuum atmosphere, a space surrounded by the cathode panel, anode panel, the frame and the bonding layer comes to be a vacuum space upon bonding. Otherwise, after the three members are bonded, the space surrounded by the cathode panel, the anode panel, the frame and the bonding layer may be vacuumed to obtain a vacuum space. When the vacuuming is carried out after the bonding, the pressure in an atmosphere during the bonding may be any one of atmospheric pressure and reduced pressure, and the gas constituting the atmosphere may be ambient atmosphere or an inert gas containing nitrogen gas or a gas (for example, Ar gas) coming under the group O of the periodic table.

When the vacuuming is carried out after the bonding, the vacuuming can be carried out through a tip tube pre-connected to the cathode panel and/or the anode panel. Typically, the tip tube is made of a glass tube and is bonded to a circumference of a through-hole formed in an ineffective field of the cathode panel and/or the anode panel (i.e., a field which does not work as an actual display portion) with a frit glass or the above low-melting-point metal material. After the space reaches a predetermined vacuum degree, the tip tube is sealed by thermal fusion. It is preferred to heat and then temperature-decrease the cold cathode field emission display as a whole before the sealing, since residual gas can be released into the space, and the residual gas can be removed out of the space by vacuuming.

In the cold cathode field emission display according to the first or third aspect of the present invention, or in the cold cathode field emission display provided by the manufacturing method of a cold cathode field emission display according to the first or third aspect of the present invention, electrons are emitted from the electron emitting portion due to an electric field formed by the anode electrode and on the basis of a quantum tunnel effect, and the electrons are drawn to the anode electrode to collide with the phosphor layer. The anode electrode may have a structure of one electrically conductive sheet covering an effective field (field for functioning as an actual display portion) or may have a stripe form. In the former case, the operation of the electron emitting portion(s) constituting one pixel is controlled. For this purpose, for example, a switching element can be provided between the electron emitting portion(s) constituting one pixel and the cathode-electrode control circuit. In the latter case, the cathode electrode is arranged in the form of a strip, and the anode electrode and the cathode electrode are arranged such that the projection image of the anode electrode and the projection image of the cathode electrode cross each other at right angles. Electrons are emitted from the electron emitting portion(s) positioned in a region where the projection image of the anode electrode and the projection image of the cathode electrode overlap (to be referred to as "anode electrode/cathode electrode overlap region" hereinafter). The arrangement of cold cathode field emission devices in one anode electrode/cathode electrode overlap region may be regular or at random. The thus-constituted cold cathode field emission display is driven by a so-called simple matrix method. That is, a relatively negative voltage is applied to the cathode electrode, and a relatively positive voltage is applied to the anode electrode. As a result, electrons are emitted into the vacuum space selectively from the electron emitting portion positioned in the anode electrode/cathode electrode overlap region of a row-selected cathode electrode and a column-selected anode electrode (or a column-selected cathode electrode and a row-selected anode electrode), and the electrons are drawn toward the anode electrode and collide with the phosphor layer constituting the anode panel, to excite and cause the phosphor layer to emit light.

In the cold cathode field emission display according to the second or fourth aspect of the present invention, or in the cold cathode field emission display provided by the manufacturing method of a cold cathode field emission display according to the second or fourth aspect of the present invention, the gate electrode in the form of a stripe and the cathode electrode in the form of a strip extend in the direction in which the projection images thereof cross each other at right angles, which is preferred for the simplification of structure of the cold cathode field emission display. One or plurality of cold cathode field emission device(s) is/are provided in an overlap region of projection images of the cathode electrode in the form of a stripe and the gate electrode in the form of a stripe (the overlap region being an electron emitting region and corresponding to a region forming one pixel or one subpixel). Such overlap regions are arranged, generally in the form of a two-dimensional matrix, in the effective field of the cathode panel. The arrangement of the cold cathode field emission devices in one overlap region may be regular or at random. A relatively negative voltage is applied to the cathode electrode, a relatively positive voltage is applied to the gate electrode, and a positive voltage higher than the voltage (to be) applied to the gate electrode is applied to the anode electrode. Electrons are emitted into the vacuum space selectively from the electron emitting portion positioned in the gate electrode/cathode electrode overlap region of a row-selected cathode electrode and a column-selected gate electrode (or a column-selected cathode electrode and a row-selected gate electrode), and the electrons are drawn toward the anode electrode and collide with the phosphor layer constituting the anode panel, to excite and cause the phosphor layer to emit light.

In the present invention, the electron emitting member or the electron emitting portion has a structure in which the carbon nanotube structures are embedded in the matrix in a state where the top portion of each carbon nanotube structure is projected, so that high electron emission efficiency can be attained. Further, in the electron emitting member of the present invention, in the manufacturing method of an electron emitting member according to the first aspect of the present invention, in the cold cathode field emission device or cold cathode field emission display according to the first or second aspect of the present invention, or in the manufacturing method of a cold cathode field emission device or cold cathode field emission display according to the first or second aspect of the present invention, there is formed the composite layer having a constitution in which the carbon nanotube structures are embedded in the matrix in the step of forming the electron emitting member or the electron emitting portion, whereby the carbon nanotube structures are not susceptible to damage at subsequent manufacturing steps, and there are no limitations to be imposed, for example, on the size of the opening portion and the thickness of the insulating layer. Further, in the preferred embodiment of the electron emitting member of the present invention, in the manufacturing method of an electron emitting member according to the second aspect of the present invention, in the cold cathode field emission device or cold cathode field emission display according to the third or fourth aspect of the present invention, or in the manufacturing method of a cold cathode field emission device or cold cathode field emission display according to the third or fourth aspect of the present invention, the matrix comprises a metal oxide, so that a gas is not released from the matrix as a binder material, that the carbon nanotube structures are not susceptible to damage at subsequent manufacturing steps, and that there are no limitations to be imposed, for example, on the size of the opening portion and the thickness of the insulating layer.

### BRIEF DESCRIPTION OF THE DRAWINGS

Fig. 1 is a schematic partial cross-sectional view of a cold cathode field emission display in Example 1.
Fig. 2 is a schematic perspective view of one electron emitting portion in the cold cathode field emission display in Example 1.
Figs. 3A, 3B and 3C are schematic partial cross-sectional views of a supporting member, etc., for explaining a manufacturing method of a cold cathode field emission device in Example 1.
Figs. 4A and 4B, following Fig. 3C, are schematic partial cross-sectional views of the supporting member, etc., for explaining the manufacturing method of a cold cathode field emission device in Example 1.
Figs. 5A, 5B, 5C and 5D are schematic partial cross-sectional views of a substrate, etc., for explaining a method of manufacturing an anode panel for the cold cathode field emission display in Example 1.
Fig. 6 is a Raman spectrum of a diamond-like amorphous carbon.
Fig. 7 is a schematic partial end view of a cold cathode field emission display in Example 2.
Fig. 8 is a schematic partial perspective view of explosion of a cathode panel and an anode panel in the cold cathode field emission display in Example 2.
Figs. 9A and 9B are schematic partial cross-sectional views of a supporting member, etc., for explaining a manufacturing method of a cold cathode field emission device in Example 2.
Figs. 10A and 10B, following Fig. 9B, are schematic partial cross-sectional views of the supporting member, etc., for explaining the manufacturing method of a cold cathode field emission device in Example 2.
Figs. 11A and 11B are schematic partial cross-sectional views of a supporting member, etc., for explaining a manufacturing method of a cold cathode field emission device in Example 3.
Figs. 12A and 12B are a schematic partial cross-sectional view of a cold cathode field emission device and a schematic layout drawing of a gate electrode and the like in Example 4, respectively.
Fig. 13 is a schematic partial cross-sectional view of a cold cathode field emission device in a variant of Example 4.
Figs. 14A, 14B, 14C and 14D are schematic plane views of a plurality of opening portions which a gate electrode in Example 4 has.
Figs. 15A, 15B and 15C are schematic partial cross-sectional views of a supporting member, etc., for explaining a manufacturing method of a cold cathode field emission device in Example 5.
Figs. 16A and 16B are a schematic cross-sectional view and a perspective view of a supporting member, etc., for explaining one example of a method of forming convexo-concave portions in a substratum or in a cathode electrode of a cold cathode field emission device, respectively.
Figs. 17A and 17B, following Figs. 16A and 16B, are a schematic cross-sectional view and a perspective view of the supporting member, etc., for explaining one example of the method of forming the convexo-concave portions in the substratum or in the cathode electrode of the cold cathode field emission device, respectively.
Figs. 18A and 18B, following Figs. 17A and 17B, are a schematic cross-sectional view and a perspective view of the supporting member, etc., for explaining one example of the method of forming the convexo-concave portions in the substratum or in the cathode electrode of the cold cathode field emission device, respectively.
Fig. 19 is a schematic view showing a state where the substratum or supporting member is disposed in a magnetic field to align the carbon nanotube structures.
Fig. 20 is a schematic partial end view of a cold cathode field emission device that is a variant of the cold cathode field emission device in Example 2 and has a focus electrode.

### BEST MODE FOR CARRYING OUT THE INVENTION

The present invention will be explained on the basis of Examples with reference to drawings.

### Example 1

Example 1 is concerned with the electron emitting member provided by the present invention, the manufacturing method of an electron emitting member provided according to the first aspect of the present invention, the cold cathode field emission device (to be abbreviated as "field emission device" hereinafter) and the manufacturing method thereof according to the first aspect of the present invention, and, the cold cathode field emission display (to be abbreviated as "display" hereinafter) of so-called two-electrodes-type and the manufacturing method thereof according to the first aspect of the present invention, and it is also concerned with the first manufacturing method.

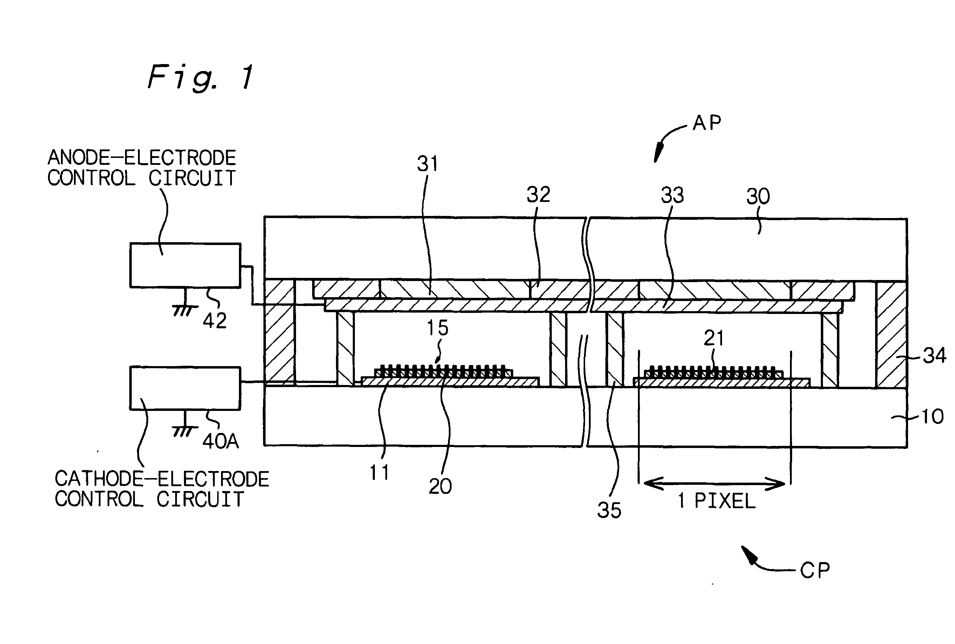

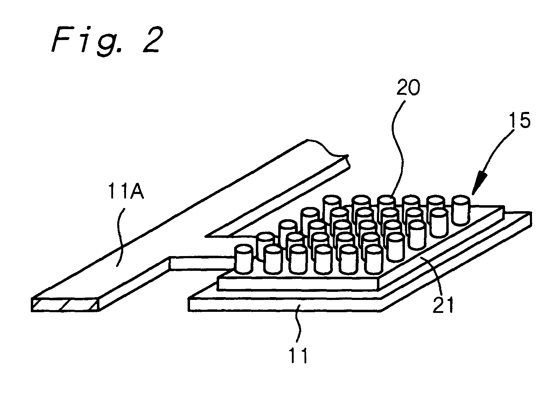

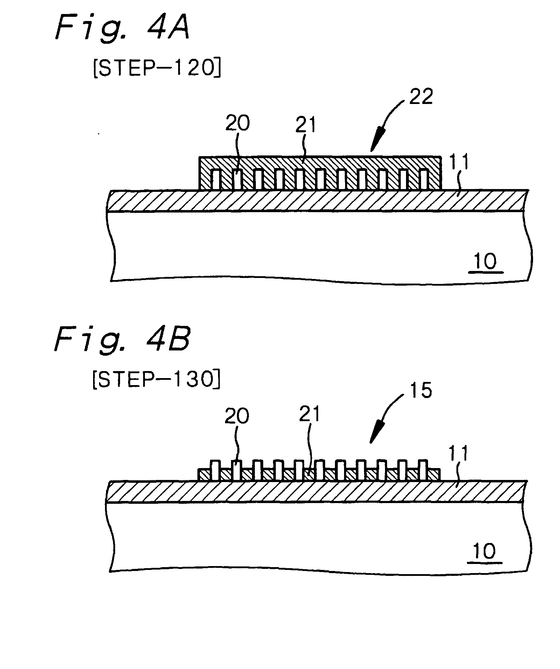

Fig. 1 shows a schematic partial cross-sectional view of a display in Example 1, Fig. 2 shows a schematic perspective view of one electron emitting portion, and Fig. 4B shows a schematic partial cross-sectional view of one electron emitting portion.

An electron emitting member in Example 1 comprises a matrix 21 and carbon nanotube structures embedded in the matrix 21 in a state where the top portion of each carbon nanotube structure is projected. Specifically, the carbon nanotube structures are constituted of carbon nanotubes 20. Further, the matrix 21 is constituted of a diamond-like amorphous carbon.

Further, a field emission device in Example 1 comprises a cathode electrode 11 formed on a supporting member 10, and an electron emitting portion 15 formed on the cathode electrode 11. The electron emitting portion 15 comprises the matrix 21 and the carbon nanotube structures embedded in the matrix 21 in a state where the top portion of each carbon nanotube structure is projected. Further, a display in Example 1 comprises a cathode panel CP and an anode panel AP. The cathode panel CP having a plurality of field emission devices and the anode panel AP having phosphor layers 31 (red-light-emitting phosphor layer 31R, green-light-emitting phosphor layer 31G and blue-light-emitting phosphor layer 31B) and an anode electrode 33 are bonded to each other in their circumferential portions, and the display has a plurality of pixels. In the cathode panel CP of the display in Example 1, a great number of electron emitting regions constituted of a plurality of the above field emission devices each are formed in an effective field in the form of a two-dimensional matrix.

Figures show that the carbon nanotubes 20 are aligned regularly and are perpendicular to the cathode electrode 11. In actual embodiments, however, the carbon nanotubes are aligned at random, and in some cases, they are aligned in a state where top portions thereof are oriented toward the anode electrode to some extent. This explanation will be also applicable in any other Figures. Further, the carbon nanotubes 20 are not necessarily required to be in contact with the cathode electrode 11 (corresponding to a substratum).

A through-hole (not shown) is provided in an ineffective field of the cathode panel CP, and a tip tube (not shown) to be sealed after discharging to form a vacuum is connected to the through-hole. A frame 34 is made of a ceramic or glass, and has a height, for example, of 1.0 mm. In some cases, an bonding layer alone may be used in place of the frame 34.

The anode panel AP comprises, specifically, a substrate 30, phosphor layers 31 formed on the substrate 30 and formed in a predetermined pattern (for example, the form of a stripe or dots), and an anode electrode 33 that covers the entire surface of the effective field and is made, for example, of an aluminum thin film. A black matrix 32 is formed on the substrate 30 and between one phosphor layer 31 and another phosphor layer 31. The black matrix 32 may be omitted. Further, when a monochromatic display is intended, it is not necessarily required to provide the phosphor layers 31 in a predetermined pattern. Further, an anode electrode made of a transparent electrically conductive film such as ITO or the like may be provided between the substrate 30 and the phosphor layer 31. Alternatively, the anode panel AP comprises an anode electrode 33 made of a transparent electrically conductive film and formed on the substrate 30; the phosphor layers 31 and the black matrix 32 formed on the anode electrode 33; and a light-reflection-electrically-conductive film made of aluminum, formed on the phosphor layers 31 and the black matrix 32, and electrically connected to the anode electrode 33.

Each pixel is constituted of the rectangular cathode electrode 11 and the electron emitting portion 15 formed thereon on the cathode panel side, and is further constituted of the phosphor layer 31 that is arranged in the effective field of the anode panel AP so as to face the electron emitting portion 15. In the effective field, such pixels are arranged in the order of several hundred thousands to several millions.

Spacers 35 are disposed between the cathode panel CP and the anode panel AP at regular intervals in the effective field as auxiliary means for maintaining a constant distance between the two panels. The form of the spacers 35 is not limited to a columnar form, and it may be a spherical form or the form of a stripe-shaped partition wall (rib). Further, the spacers 35 are not necessarily required to be arranged at four corners of the overlap region of each of all cathode electrodes, and they may be arranged less densely or irregularly.

In the above display, the voltage to be applied to the cathode electrode 11 is controlled per unit of one pixel. The cathode electrode 11 has the form of a rectangle as a plane form as schematically shown in Fig. 2. Each cathode electrode 11 is connected to a cathode-electrode control circuit 40A through a wiring 11A and a switching element (not shown) comprising, for example, a transistor. Further, the anode electrode 33 is connected to an anode-electrode control circuit 42. When a voltage of a threshold voltage or higher is applied to each cathode electrode 11, electrons are emitted from the electron emitting portion 15 due to an electric field formed by the anode electrode 33 and on the basis of a quantum tunnel effect, and the electrons are drawn toward the anode electrode 33 to collide with the phosphor layer 31. The brightness is controlled by the voltage applied to the cathode electrode 11.

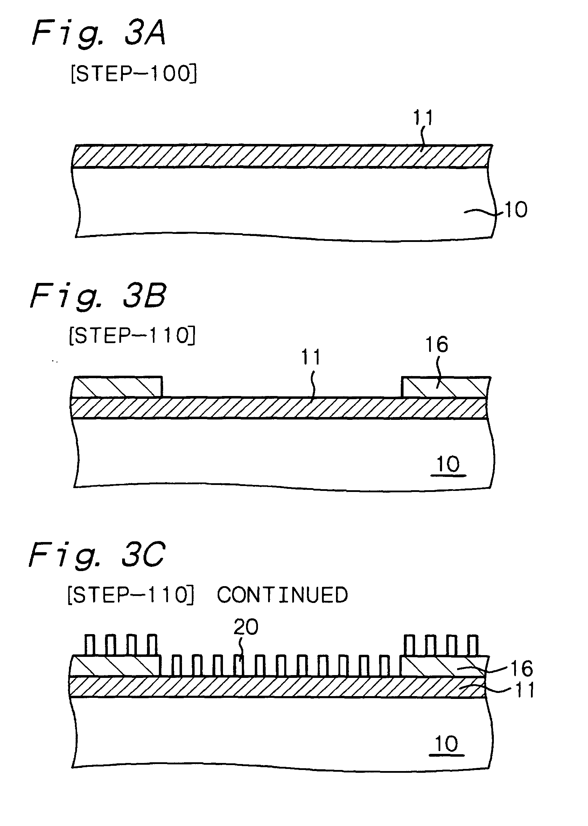

The manufacturing method of an electron emitting member, the manufacturing method of a field emission device and the manufacturing method of a display in Example 1 will be explained below with reference to Figs. 3A, 3B and 3C, Figs. 4A and 4B, and Figs. 5A, 5B, 5C and 5D.

### [Step-100]

First, an electrically conductive material layer for forming a cathode electrode is formed on the supporting member 10 made, for example, of a glass substrate. Then, the electrically conductive material layer is patterned by a known lithography technique and a known reactive ion etching (RIE) method, whereby the rectangular cathode electrode 11 is formed on the supporting member 10 (see Fig. 3A). At the same time, a wiring 11A (see Fig. 2) connected to the cathode electrode 11 is formed on the supporting member 10. The electrically conductive material layer is, for example, an approximately 0.2 µm thick chromium (Cr) layer formed by a sputtering method.

### [Step-110]

Then, carbon nanotubes 20 are arranged on the surface of a predetermined region (region on which the electron emitting portion is to be formed) of the cathode electrode 11 (corresponding to a substratum). Specifically, a resist material layer is formed on the entire surface by a spin coating method, and then, by a lithography technique formed is a mask layer 16 in which the surface of region of the cathode electrode 11 where the electron emitting portion is to be formed is exposed (see Fig. 3B). Then, a dispersion of the carbon nanotubes in an organic solvent such as acetone is spin-coated on the mask layer 16 including the exposed surface of the cathode electrode 11, and then, the organic solvent is removed (see Fig. 3C). The carbon nanotubes 20 have a tube structure having, for example, an average diameter of 1 nm and an average length of 1 µm and are manufactured by an arc discharge method. The carbon nanotubes 20 may be aligned at random with regard to the cathode electrode 11 (that is, they are disposed on the cathode electrode 11 in a tangled state), or may be aligned in one direction.

### [Step-120]

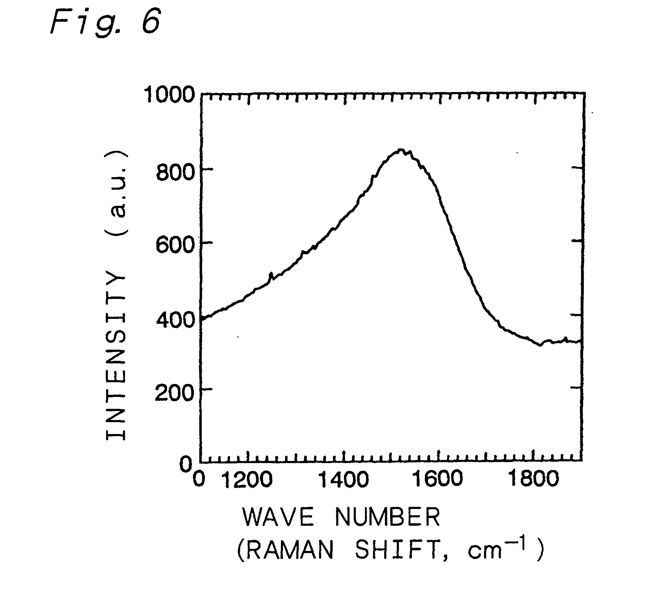

Then, a diamond-like amorphous carbon for a matrix 21 is deposited on the exposed region of the cathode electrode 11 and the carbon nanotubes 20. In this manner, a composite layer 22, in which the carbon nanotubes 20 are embedded in the matrix 21, can be formed on the predetermined region (region where the electron emitting portion is to be formed) of the cathode electrode 11. Table 1 shows a condition of forming the matrix 21 (average thickness: 0.3 µm) composed of a diamond-like amorphous carbon by a plasma CVD method. Then, the mask layer 16 is removed. In this manner, a structure shown in Fig. 4A can be obtained. In a Raman spectrum with a laser beam having a wavelength of 514.5 nm, the matrix 21 composed of the diamond-like amorphous carbon had a peak of half-value width 50 cm⁻¹ or more in the wave number range of 1400 to 1630 cm⁻¹. Fig. 6 shows a drawing of the obtained Raman spectrum.

**Table 1**

| Apparatus | Parallel plate RF-CVD system |
|---|---|
| Gas used | CH₄ = 50 sccm |
| Pressure | 0.1 Pa |
| Forming temperature | Room temperature |
| Forming time period | 10 minutes |
| Plasma-exciting power | 500 W |

### [Step-130]

Then, the matrix 21 in the surface of the composite layer 22 is removed by an etching method, to form an electron emitting member or electron emitting portion in which the carbon nanotubes 20 are embedded in the matrix 21 with their top portions projected. In this manner, a field emission device having a structure shown in Fig. 4B can be obtained. Table 2 shows a condition of wet-etching the matrix 21, and Table 3 shows a condition of dry-etching the matrix 21. Some or all of the carbon nanotubes 20 may change in their surface state due to the etching of the matrix 21 (for example, oxygen atoms or oxygen molecules or fluorine atoms are adsorbed to their surfaces), and the carbon nanotubes 20 are deactivated with respect of field emission in some cases. Therefore, then, it is preferred to subject the electron emitting member or the electron emitting portion to a plasma treatment in a hydrogen gas atmosphere. By the plasma treatment, the electron emitting member or the electron emitting portion is activated, and the efficiency of emission of electrons from the electron emitting member or the electron emitting portion is further improved. The following Table 4 shows a condition of the plasma treatment.

**Table 2**

| [Wet-etching conditions] | |
|---|---|
| Etching solution | KMnO₄ |
| Etching temperature | 80 °C |
| Etching time period | 1 - 10 minutes |

**Table 3**

| [Dry-etching conditions] | |
|---|---|
| Etching apparatus | ICP-etching apparatus |
| Gas used | O₂ (that may contain CF₄ and the like) |
| Etching temperature | Room temperature - 80 °C |
| Plasma-exciting power | 1500 W |
| RF bias | 20 - 100 W |
| Etching time period | 1 - 10 minutes |

**Table 4**

| | |
|---|---|
| Gas used | H₂ = 100 sccm |
| Source power | 1000 W |
| Power to be applied to supporting member | 50 V |
| Reaction pressure | 0.1 Pa |
| Substrate temperature | 300 °C |

Then, for releasing a gas from the carbon nanotubes 20, a heat treatment or various plasma treatments may be carried out. The carbon nanotubes 20 may be exposed to a gas containing a substance which is to be adsorbed thereon, for allowing such a substance to be adsorbed intentionally on the surface of the carbon nanotube 20. Further, for purifying the carbon nanotubes 20, an oxygen plasma treatment or a fluorine plasma treatment may be carried out. The above explanations will be also applied to Examples to be described later.

### [Step-140]

Then, a display is assembled. Specifically, the anode panel AP and the cathode panel CP are arranged such that the phosphor layer 31 and the field emission device face each other, and the anode panel AP and the cathode panel CP (more specifically, the substrate 30 and the supporting member 10) are bonded to each other in their circumferential portions through the frame 34. In the bonding, a frit glass is applied to bonding portions of the frame 34 and the anode panel AP and bonding portions of the frame 34 and the cathode panel CP. Then, the anode panel AP, the cathode panel CP and the frame 34 are attached. The frit glass is pre-calcined or pre-sintered to be dried, and then fully calcined or sintered at approximately 450 °C for 10 to 30 minutes. Then, a space surrounded by the anode panel AP, the cathode panel CP, the frame 34 and the frit glass is vacuumed through a through-hole (not shown) and a tip tube (not shown), and when the space comes to have a pressure of approximately 10⁻⁴ Pa, the tip tube is sealed by thermal fusion. In the above manner, the space surrounded by the anode panel AP, the cathode panel CP and the frame 34 can be vacuumed. Then, wiring to external circuits is carried out to complete the display.

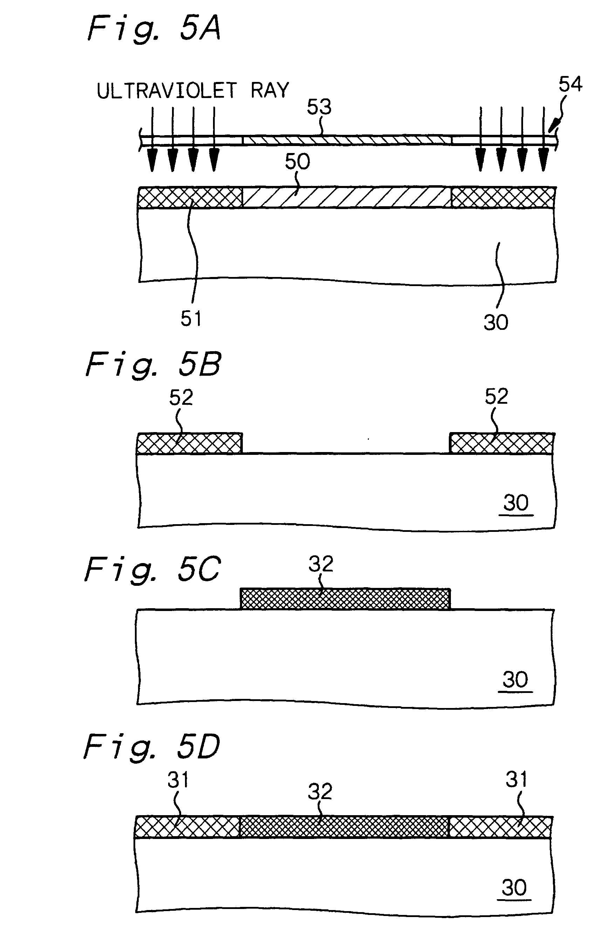

One example of method of preparing the anode panel AP in the display shown in Fig. 1 will be explained with reference to Figs. 5A to 5D.

First, a light-emitting crystal particle composition is prepared. For this purpose, for example, a dispersing agent is dispersed in pure water, and the mixture is stirred with a homo-mixer at 3000 rpm for 1 minute. Then, the light-emitting crystal particles are poured into the dispersion of the dispersing agent and pure water, and the mixture is stirred with a homo-mixer at 5000 rpm for 5 minutes. Then, for example, polyvinyl alcohol and ammonium bichromate are added, and the resultant mixture is fully stirred and filtered.

In the preparation of the anode panel AP, a photosensitive coating 50 is formed (applied) on the entire surface of a substrate 30 made, for example, of glass. Then, the photosensitive coating 50 formed on the substrate 30 is exposed to ultraviolet ray which is radiated from a light source (not shown) and passes through openings 54 formed in a mask 53, to form a light-exposed region 51 (see Fig. 5A). Then, the photosensitive coating 50 is selectively removed by development, to retain a remaining photosensitive coating portion (exposed and developed photosensitive coating) 52 on the substrate 30 (see Fig. 5B). Then, a carbon agent (carbon slurry) is applied onto the entire surface, dried and calcined or sintered, and then, the remaining photosensitive coating portion 52 and the carbon agent thereon are removed by a lift-off method, whereby a black matrix 32 composed of the carbon agent is formed on the exposed substrate 30, and at the same time, the remaining photosensitive coating portion 52 is removed (see Fig. 5C). Then, phosphor layers 31 of red, green and blue are formed on the exposed substrate 30, respectively (see Fig. 5D). Specifically, the light-emitting crystal particle compositions prepared from the light-emitting crystal particles (phosphor particles) are used. For example, a red photosensitive light-emitting crystal particle composition (phosphor slurry) is applied onto the entire surface, followed by exposure to ultraviolet ray and development. Then, a green photosensitive light-emitting crystal particle composition (phosphor slurry) is applied onto the entire surface, followed by exposure to ultraviolet ray and development. Further, a blue photosensitive light-emitting crystal particle composition (phosphor slurry) is applied onto the entire surface, followed by exposure to ultraviolet ray and development. Then, the anode electrode 33 composed of an approximately 0.07 pm thick aluminum thin film is formed on the phosphor layers 31 and the black matrix 32 by a sputtering method. Alternatively, each phosphor layer 31 can be also formed by a screen-printing method or the like.

The anode electrode may be an anode electrode having a form in which the effective field is covered with one sheet-shaped electrically conductive material or may be an anode electrode having a form in which anode electrode units each of which corresponds to one or a plurality of electron emitting portions or one or a plurality of pixels are gathered. Such a constitution of the anode electrode can be applied to Example 5 to be described later.

Each pixel may be constituted of the cathode electrode in the form of a stripe, the electron emitting portion formed thereon and the phosphor layer arranged in the effective filed of the anode panel so as to face the electron emitting portion. In this case, the anode electrode also has the form of a stripe. The projection image of the cathode electrode in the form of a stripe and the projection image of the anode electrode in the form of a stripe cross each other at right angles. Electrons are emitted from the electron emitting portion positioned in a region where the projection image of the anode electrode and the projection image of the cathode electrode overlap. The display having such a constitution is driven by a so-called simple matrix method. Specifically, a relatively negative voltage is applied to the cathode electrode, and a relatively positive voltage is applied to the anode electrode. As a result, electrons are selectively emitted into a vacuum space from the electron emitting portion positioned in the anode electrode/cathode electrode overlap region of a row-selected cathode electrode and a column-selected anode electrode (or a column-selected cathode electrode and a row-selected anode electrode). The electrons are drawn to the anode electrode, collide with the phosphor layer constituting the anode panel, excite the phosphor layer, and cause the phosphor layer to emit light.

The thus-structured field emission device can be manufactured by forming an electrically conductive material layer composed of a chromium (Cr) layer for forming a cathode electrode on the supporting member 10 made, for example, of a glass substrate by, for example, a sputtering method, and then patterning the electrically conductive material layer by a known lithography technique and a known RIE method in [Step-100], to form a cathode electrode 11 in the form of a stripe on the supporting member 10 in place of the rectangular cathode electrode. The above structure can be also applied to Example 5 to be described later.

### Example 2

Example 2 is concerned with the electron emitting member provided by the present invention, the manufacturing method of an electron emitting member according to the first aspect of the present invention, the field emission device and the manufacturing method thereof according to the second aspect of the present invention, and, the display of so-called three-electrodes-type and the manufacturing method thereof according to the second aspect of the present invention, and Example 2 is also concerned with the first manufacturing method.

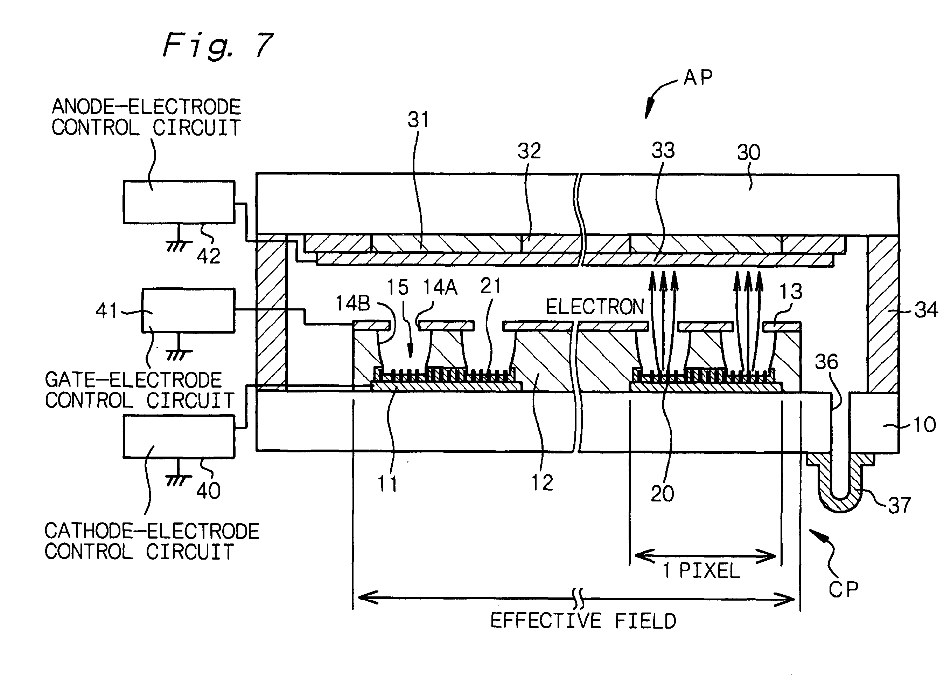

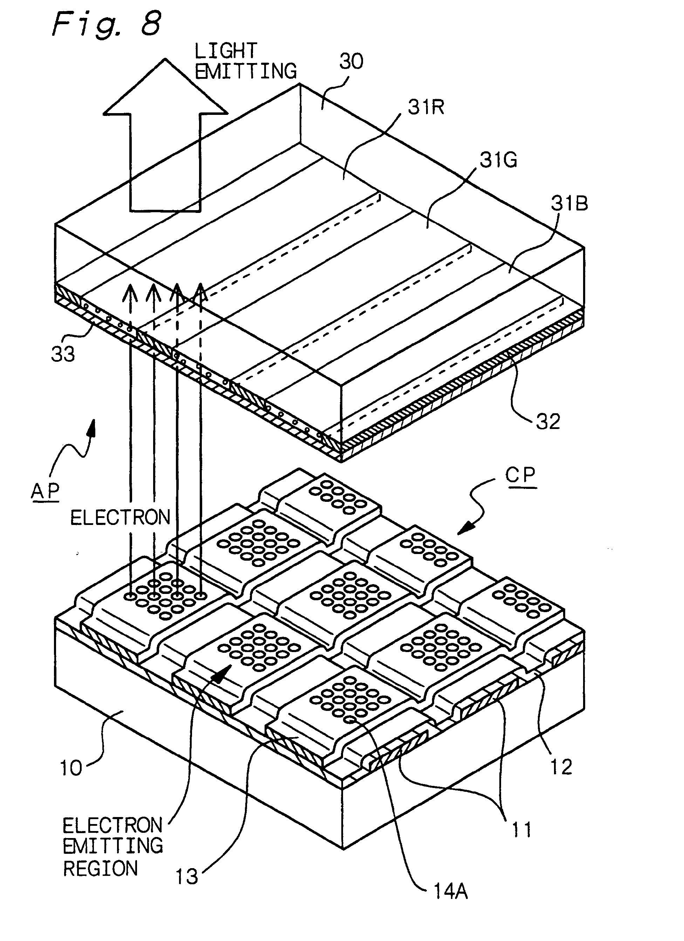

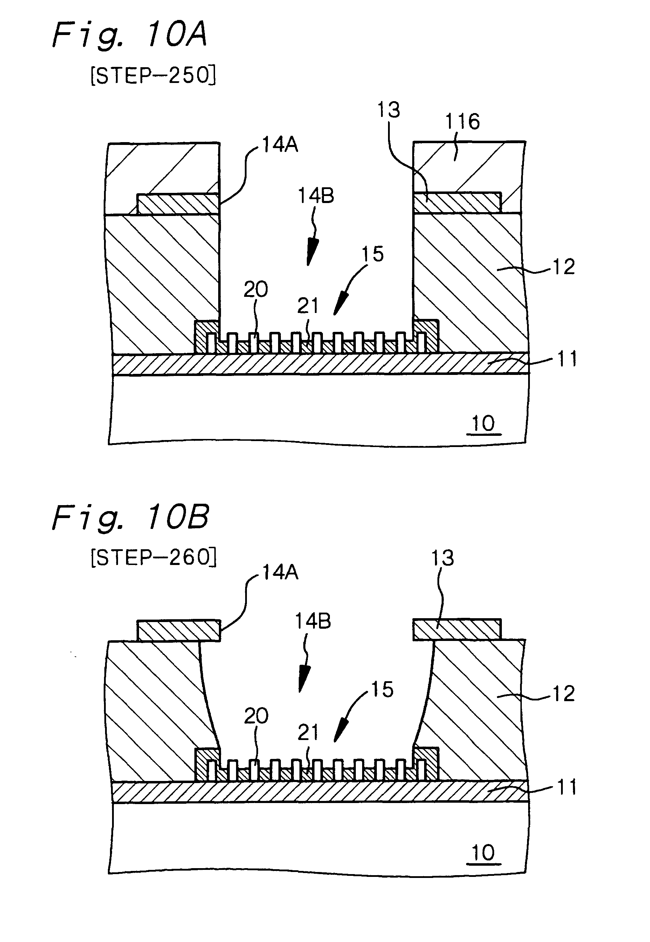

Fig. 10B shows a schematic partial end view of a field emission device in Example 2, Fig. 7 shows a schematic partial end view of a display, and Fig. 8 shows a partial perspective view of an exploded cathode panel CP and an exploded anode panel AP. The field emission device comprises a cathode electrode 11 (corresponding to a substratum) formed on a supporting member 10; an insulating layer 12 formed on the supporting member 10 and the cathode electrode 11; a gate electrode 13 formed on the insulating layer 12; an opening portion formed through the gate electrode 13 and the insulating layer 12 (a first opening portion 14A formed through the gate electrode 13 and a second opening portion 14B formed through the insulating layer 12); and an electron emitting portion 15 exposed in a bottom portion of the second opening portion 14B. The electron emitting portion 15 or an electron emitting member comprises a matrix 21 and carbon nanotube structures (specifically, carbon nanotubes 20) embedded in the matrix 21 in a state where the top portion of each carbon nanotube structure is projected. The matrix 21 is composed of a diamond-like amorphous carbon.

The display comprises a cathode panel CP having a number of the above field emission devices formed in an effective field and an anode panel AP and is constituted of a plurality of pixels. Each pixel comprises a plurality of field emission devices, an anode electrode 33 and a phosphor layer 31 formed on a substrate 30 so as to face the field emission devices. The cathode panel CP and the anode panel AP are bonded to each other through a frame 34 in their circumferential portions. In the partial end view shown in Fig. 7, in the cathode panel CP, two opening portions 14A, 14B and two electron emitting portions 15 are shown per cathode electrode 11 for simplification of drawings, while the numbers of such shall not be limited thereto. Further, the field emission device has a basic constitution as shown in Fig. 10B. Further, a through-hole 36 for discharging to form a vacuum is provided in the ineffective field of the cathode panel CP, and a tip tube 37 to be sealed after the vacuuming is connected to the through-hole 36. Fig. 7 shows a completion state of the display, and the tip tube 37 is already sealed. Showing of a spacer is omitted.

The anode panel AP can have the same structure as that of the anode panel AP explained in Example 1, so that a detailed explanation thereof will be omitted.

When the above display is used for displaying, a relatively negative voltage is applied to the cathode electrode 11 from a cathode-electrode control circuit 40, a relatively positive voltage is applied to the gate electrode 13 from a gate-electrode control circuit 41, and a positive voltage higher than the voltage (to be) applied to the gate electrode 13 is applied to the anode electrode 33 from an anode-electrode control circuit 42. When the above display is used for displaying, for example, a scanning signal is inputted to the cathode electrode 11 from the cathode-electrode control circuit 40, and a video signal is inputted to the gate electrode 13 from the gate-electrode control circuit 41. Alternatively, a video signal may be inputted to the cathode electrode 11 from the cathode-electrode control circuit 40, and a scanning signal is inputted to the gate electrode 13 from the gate-electrode control circuit 41. Electrons are emitted from the electron emitting portion 15 on the basis of a quantum tunnel effect by an electric field generated when a voltage is applied between the cathode electrode 11 and the gate electrode 13, and the electrons are drawn toward the anode electrode 33 to collide with the phosphor layer 31. As a result, the phosphor layer 31 is excited to emit light, and an intended image can be obtained.

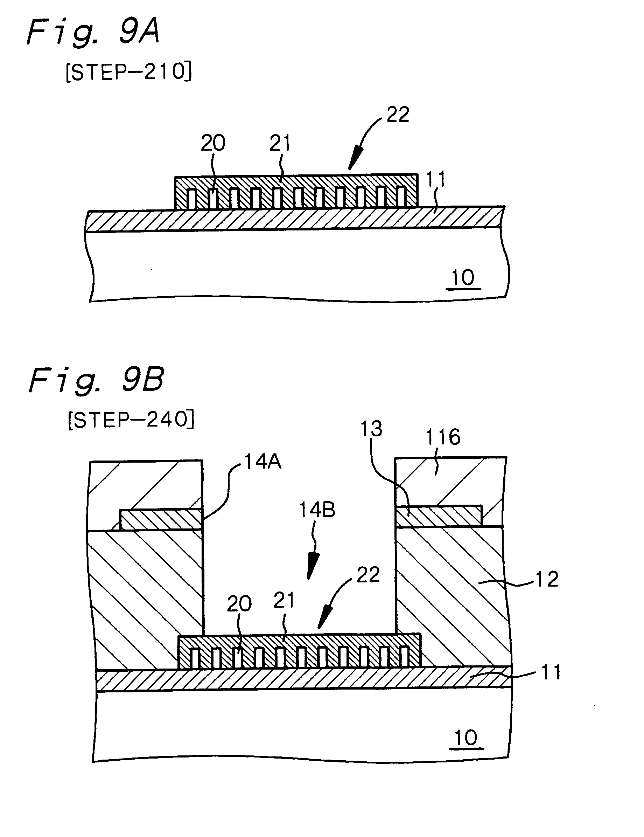

The manufacturing method of an electron emitting member, the manufacturing method of a field emission device and the manufacturing method of a display in Example 2 will be explained below with reference to Figs. 9A and 9B, and Figs. 10A and 10B.

### [Step-200]

First, an electrically conductive material layer for forming a cathode electrode is formed on the supporting member 10 made, for example, of a glass substrate, and the electrically conductive material layer is patterned by a known lithography technique and a known RIE method, to form the cathode electrode 11 (corresponding to a substratum) in the form of a stripe on the supporting member 10. The cathode electrode 11 in the form of a stripe is extending leftward and rightward on the paper surface of the drawings. The electrically conductive material layer is, for example, an approximately 0.2 µm thick chromium (Cr) layer formed by a sputtering method.

### [Step-210]

Then, the composite layer 22 is formed on the surface of the cathode electrode 11 in the same manner as in [Step-110] and [Step-120] in Example 1 (see Fig. 9A). Then, a buffer layer made, for example, of ITO may be formed on the composite layer 22.

### [Step-220]

Then, the insulating layer 12 is formed on the composite layer 22, the supporting member 10 and the cathode electrode 11. Specifically, the insulating layer 12 having a thickness of approximately 1 µm is formed on the entire surface, for example, by a CVD method using TEOS (tetraethoxysilane) as a source gas.

### [Step-230]

Then, the gate electrode 13 having the first opening portion 14A is formed on the insulating layer 12. Specifically, an electrically conductive material layer composed of a chromium (Cr) for constituting the gate electrode is formed on the insulating layer 12 by a sputtering method, a patterned first mask material layer (not shown) is formed on the electrically conductive material layer, and the electrically conductive material layer is etched with using the first mask material layer as an etching mask, to pattern the electrically conductive material layer in the form of a stripe, and the first mask material layer is removed. Then, a patterned second mask material layer 116 is formed on the electrically conductive material layer and the insulating layer 12, and the electrically conductive material layer is etched with using the second mask material layer 116 as an etching mask. In this manner, the gate electrode 13 having the first opening portion 14A can be formed on the insulating layer 12. The gate electrode 13 in the form of a stripe is extending in the direction (for example, direction perpendicular to the paper surface of the drawing) different from the direction of the cathode electrode 11.

### [Step-240]

Then, the second opening portion 14B communicating with the first opening portion 14A formed through the gate electrode 13 is formed through the insulating layer 12. Specifically, the insulating layer 12 is etched by an RIE method using the second mask material layer 116 as an etching mask. In this manner, a structure shown in Fig. 9B can be obtained. In Example 2, the first opening portion 14A and the second opening portion 14B have the relationship of one-to-one correspondence. That is, one second opening portion 14B is formed so as to correspond to one first opening portion 14A. The first and second opening portions 14A and 14B have a plane form that is, for example, a circle having a diameter of 3 µm. For example, approximately several hundreds opening portions 14A and 14B can be formed per pixel. When the buffer layer is formed on the composite layer 22, the buffer layer is etched thereafter.

### [Step-250]

Then, the matrix 21 in the surface of the composite layer 22 exposed in the bottom portion of the second opening portion 14B is removed, to form the electron emitting portion 15 constituted of the electron emitting member having the carbon nanotubes 20 embedded in the matrix 21 in a state where the top portions thereof are projected (see Fig. 10A). Specifically, a step similar to [Step-130] in Example 1 can be carried out.

### [Step-260]

Then, preferably, the side wall surface of the second opening portion 14B is isotropically etched backward, for exposing the opening end portion of the gate electrode 13. The isotropic etching can be carried out by dry etching using a radical as an etching species such as chemical dry etching, or by wet etching using an etching solution. As an etching solution, for example, a mixture of a 49 % hydrofluoric acid aqueous solution and pure water in the aqueous solution:pure water mixing ratio of 1:100 (volume ratio) can be used. Then, the second mask material layer 116 is removed. In this manner, there can be completed a field emission device shown in Fig. 10B.

### [Step-270]

Then, a display is assembled in the same manner as in [Step-140] in Example 1.

[Step-240] may be followed by the isotropic etching of the side wall surface of the second opening portion 14B in [Step-260], and then [Step-250] may be carried out, followed by the removal of the second mask material layer 116.

### Example 3

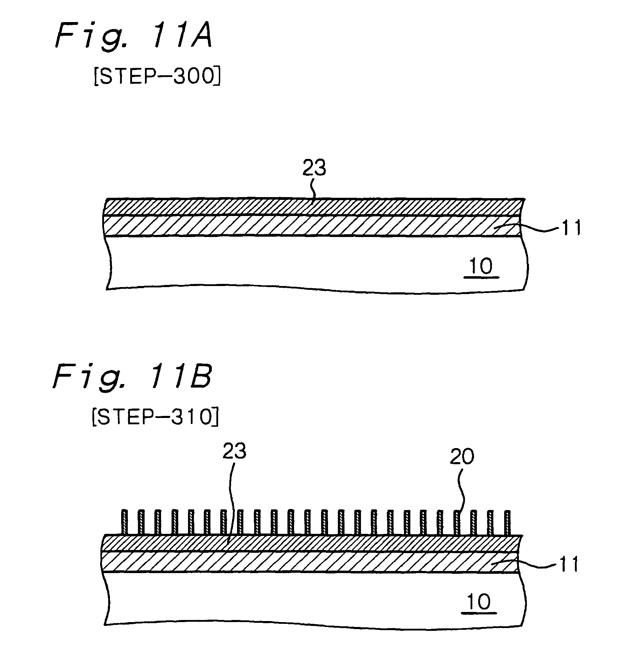

Example 3 is a variant of Example 2. Example 3 differs from Example 2 in that the carbon nanotubes are formed on the cathode electrode 11 (substratum) by a plasma CVD method. That is, Example 3 is concerned with the second manufacturing method. The manufacturing method of an electron emitting member, the manufacturing method of a field emission device and the manufacturing method of a display in Example 3 will be explained below with reference to Figs. 11A and 11B.

### [Step-300]

First, there is formed a cathode electrode 11 having a selective growth region 23 formed in a surface region where an electron emitting portion is to be formed. Specifically, a mask layer made of a resist material is formed on a supporting member 10 made, for example, of a glass substrate. The mask layer is formed so as to cover that portion of the supporting member 10 which does not constitute any portion where the cathode electrode in the form of a stripe is to be formed. Then, an aluminum (Al) layer is formed on the entire surface by a sputtering method, and then a nickel (Ni) layer is formed on the aluminum layer by a sputtering method. Then, the mask layer and the aluminum layer and the nickel layer formed thereon are removed, whereby there can be formed the cathode electrode 11 having the selective growth region 23 composed of nickel and formed in the surface region where an electron emitting portion is to be formed (see Fig. 11A). The cathode electrode 11 is extending leftward and rightward on the paper surface of Figs. 11A and 11B. The cathode electrode 11 and the selective growth region 23 are in the form of a stripe. The above lift-off method may be replaced with the formation of an electrically conductive material layer to constitute the cathode electrode and a layer to constitute the selective growth region and the patterning of these by a lithography technique and a dry-etching technique, in order to form the selective growth region 23 and the cathode electrode 11 in the form of a stripe. Further, the selective growth region 23 may be formed in only that surface region of the cathode electrode 11 where the electron emitting portion is to be formed.

### [Step-310]

Then, carbon nanotubes 20 are formed under a helicon wave plasma CVD condition shown in the following Table 5 with a helicon wave plasma CVD apparatus (see Fig. 11B). For changing the crystallinity of the carbon nanotubes 20, the CVD condition may be changed as required. For stabilizing the discharging and promoting plasma dissociation, a diluting gas such as helium (He), argon (Ar) or the like, may be admixed, or a doping gas such as nitrogen, ammonia or the like, may be admixed.

**Table 5**

| | |
|---|---|
| Gas used | CH₄/H₂ = 50/50 sccm |
| Power source power | 3000 W |
| Power applied to supporting member | 300 V |
| Reaction pressure | 0.1 Pa |
| Supporting member temperature | 300 °C |
| Plasma density | 1x10¹³/cm³ |
| Electron temperature | 5 eV |
| Ion current density | 5 mA/cm² |

A thin amorphous carbon film may be deposited on the surface of the carbon nanotube 20 or on that portion of the selective growth region 23 where no carbon nanotubes are formed. In this case, desirably, the formation of the carbon nanotubes 20 is followed by a plasma treatment in a hydrogen gas atmosphere, to remove the thin amorphous carbon film. As a plasma treatment condition, the condition shown in Table 4 can be employed.

### [Step-320]

Then, steps similar to [Step-120] in Example 1 and [Step-220] to [Step-260] in Example 2 are carried out to complete an electron emitting portion, and a step similar to [Step-270] in Example 2 is carried out to complete a display.

### Example 4

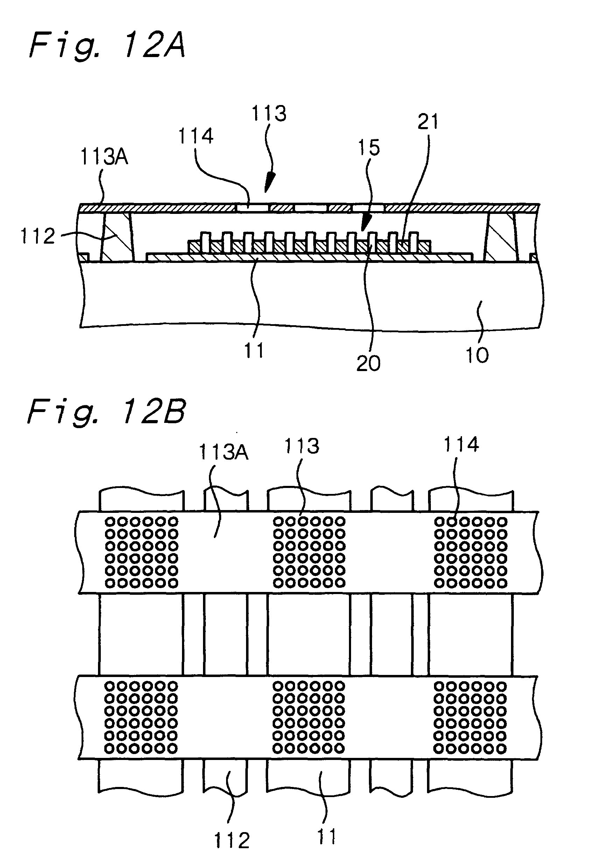

The field emission device in Example 4 is concerned with a combination of the field emission device explained in Example 1 and the gate electrode, and it is a three-electrodes-type field emission device structurally different from the three-electrodes-type field emission device explained in Example 2 to some extent. Fig. 12A shows a schematic partial cross-sectional view of the field emission device in Example 4, and Fig. 12B shows a layout of a cathode electrode, a band-like material, a gate electrode and a gate electrode support portion.

The field emission device has a structure in which the gate electrode support portion made of an insulating material in the form of a stripe or a grille is formed on the supporting member, and in which the gate electrode made of a band-like material and provided with a plurality of opening portions is stretched and bridged such that it is in contact with the top surface of the gate electrode support portion and that the opening portions are positioned above the electron emitting portion.

The thus-structured field emission device can be manufactured by a method comprising the steps of;
(a) forming the gate electrode support portion made of an insulating material in the form of a stripe or a grille on the supporting member, and forming the cathode electrode and the electron emitting portion on the supporting member, and
(b) stretching and bridging a band-like material such that a gate electrode made of the band-like material and provided with a plurality of opening portions is in contact with the top surface of the gate electrode support portion and that the opening portions are positioned above the electron emitting portion.

The gate electrode support portion may be formed between one stripe-shaped cathode electrode and another adjacent stripe-shaped cathode electrode or between one cathode electrode group and another adjacent cathode electrode group in which each group consists of a plurality of cathode electrodes. The material for constituting the gate electrode support portion can be selected from known insulating materials. For example, a material prepared by mixing widely used low melting glass with a metal oxide such as alumina or an insulating material such as SiO₂ and the like can be used. The gate electrode support portion can be formed, for example, by a combination of a CVD method with an etching method, a screen printing method, a sand blast forming method, a dry film method or a photo-sensitive method. The dry film method refers to a method in which a photosensitive film is laminated on the supporting member; the photosensitive film in a portion where the gate electrode support portion is to be formed is removed by exposure and development; and a material for forming the gate electrode support portion is filled in the opening formed by the removal and is calcined or sintered. The photosensitive film is combusted and removed by the calcining or sintering, and the material for forming the gate electrode support portion filled in the opening remains and constitutes the gate electrode support portion. The photo-sensitive method refers to a method in which an insulating material for forming the gate electrode support portion having photosensitivity is formed on the supporting member; the insulating material is patterned by exposure and development; and then, the insulating material is calcined or sintered. The sand blast forming method refers to a method in which a material layer for forming the gate electrode support portion is formed on the supporting member, for example, by screen printing or with a roll coater, a doctor blade or a nozzle-ejecting coater and is dried; and then, that portion in the material layer where the gate electrode support portion is to be formed is covered with a mask layer, and an exposed portion of the material layer for forming the gate electrode support portion is removed by a sand blasting method.

Specially, the field emission device of Example 4 comprises a stripe-shaped gate electrode support portion 112 made of an insulating material and formed on a supporting member 10; a cathode electrode 11 formed on the supporting member 10; a gate electrode 113 made of a band-like material 113A provided with a plurality of opening portions 114; and an electron emitting portion 15 formed on the cathode electrode 11, wherein the band-like material 113A is stretched and bridged such that it comes in contact with the top surface of the gate electrode support portion 112 and that the opening portion 114 is positioned above the electron emitting portion 15. The electron emitting portion 15 comprises an electron emitting member formed on the surface of a portion of the cathode electrode 11 positioned in the bottom portion of the opening portion 114. The band-like material 113A is fixed to the top surface of the gate electrode support portion 112 with a thermosetting adhesive (for example, an epoxy adhesive). The band-like material provided with a plurality of opening portions may be composed from a material selected from those materials constituting the gate electrode discussed above and may be formed in advance.

One embodiment of the manufacturing method of a field emission device in Example 4 will be explained below.

### [Step-400]

First, a gate electrode support portion 112 is formed on the supporting member 10, for example, by a sand blast forming method.

### [Step-410]

Then, the electron emitting portion 15 is formed on the supporting member 10. Specifically, an electron emitting portion constituted of an electron emitting member having carbon nanotubes 20 embedded in a matrix 21 in a state where top portions of the carbon nanotubes 20 are projected, can be obtained on the cathode electrode 11 in the same manner as in [Step-100] to [Step-130] in Example 1. Alternatively, the electron emitting portion may be formed by carrying out the steps similar to [Step-300] and [Step-310] in Example 3 and then carrying out the steps similar to [Step-120] and [Step-130].

### [Step-420]

Then, the band-like material 113A-provided with a plurality of opening portions 114 and having the form of a strip is disposed in a state where it is supported by the gate electrode support portion 112 such that a plurality of the opening portions 114 are positioned above the electron emitting portion 15, whereby the gate electrode 113 constituted of the band-like material 113A in the form of a stripe and provided with a plurality of the opening portions 114 is positioned above the electron emitting portion 15. The band-like material 113A in the form of a stripe can be fixed to the top surface of the gate electrode support portion 112 with a thermosetting adhesive (for example, an epoxy adhesive). The projection image of the cathode electrode 11 in the form of a stripe and the projection image of the band-like material 113A in the form of a stripe cross each other at right angles.

In Example 4, the gate electrode support portion 112 may be formed on the supporting member 10, for example, by a sand blast forming method after the cathode electrode 11 is formed on the supporting member 10. Further, the gate electrode support portion 112 may be formed, for example, by a combination of a CVD method and an etching method.

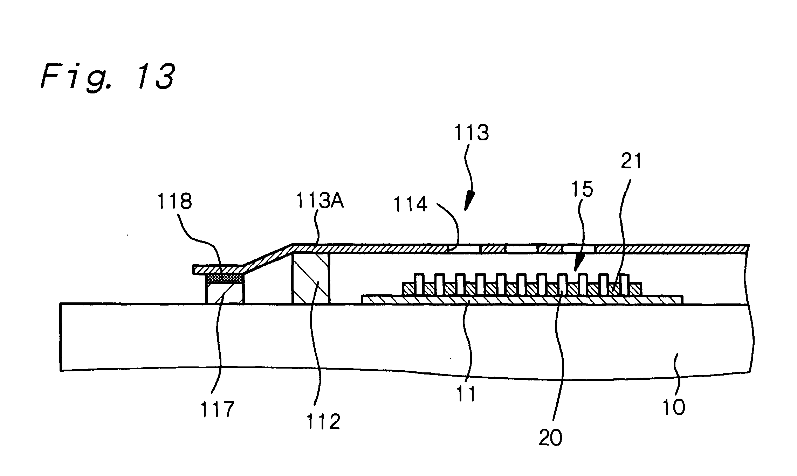

As Fig. 13 shows a schematic partial cross-sectional view in the vicinity of end portion of the supporting member 10, there may be employed a structure in which each end of the band-like material 113A in the form of a stripe is fixed in a circumferential portion of the supporting member 10. More specifically, for example, a projection 117 is formed in the circumferential portion of the supporting member 10 in advance, and a thin film 118 made of a material that is the same as a material to constitute the band-like material 113A is formed on the top surface of the projection 117. And, while the band-like material 113A in the form of a stripe is stretched and bridged, the band-like material 113A is welded to the thin film 118, for example, with a laser. The projection 117 can be formed, for example, simultaneously with the formation of the gate electrode support portion.

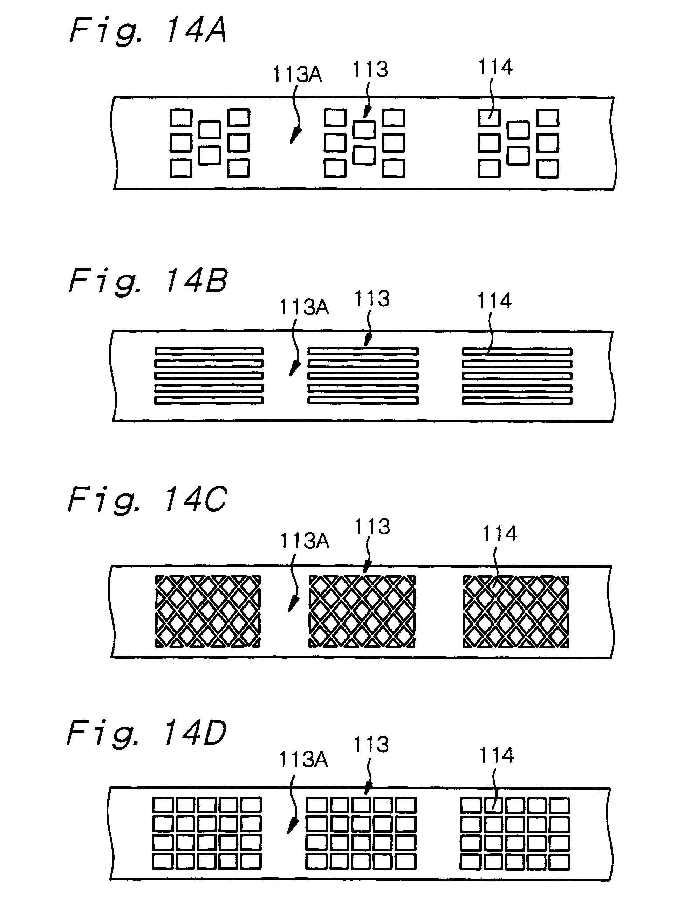

The plane form of the opening portion 114 in the field emission device of Example 4 is not limited to a circular form. Figs. 14A, 14B, 14C and 14D show variants of the form of the opening portion 114 made through the band-like material 113A. The field emission device in Example 4 may be a combination of a field emission device to be explained in the following Example 5 and the gate electrode.

### Example 5

Example 5 is concerned with the electron emitting member provided by the present invention, the manufacturing method of an electron emitting member according to the second aspect of the present invention, the field emission device and the manufacturing method thereof according to the third aspect of the present invention, and, the display of so-called two-electrodes-type and the manufacturing method thereof according to the third aspect of the present invention.

The schematic partial cross-sectional view of a display, the schematic perspective view of one electron emitting portion and the schematic partial cross-sectional view of one electron emitting portion in Example 5 are similar to those shown in Fig. 1, Fig. 2 and Fig. 4B.

The electron emitting member in Example 5 comprises a matrix 21 and carbon nanotube structures (specifically, carbon nanotubes 20) embedded in the matrix 21 in a state where the top portion of each carbon nanotube structure is projected. The matrix 21 comprises a metal oxide having an electrical conductivity (specifically, indium-tin oxide, ITO).

The field emission device in Example 5 comprises a cathode electrode 11 formed on a supporting member 10, and an electron emitting portion 15 formed on the cathode electrode 11. The electron emitting portion 15 comprises a matrix 21 and carbon nanotube structures (specifically, carbon nanotubes 20) embedded in the matrix 21 in a state where the top portion of each carbon nanotube structure is projected, and the matrix 21 is composed of a metal oxide having an electrical conductivity (specifically, indium-tin oxide, ITO). The display and the anode panel AP in Example 5 have substantially the same structures as those of the display and the anode panel AP explained in Example 1, so that a detailed explanation thereof will be omitted.

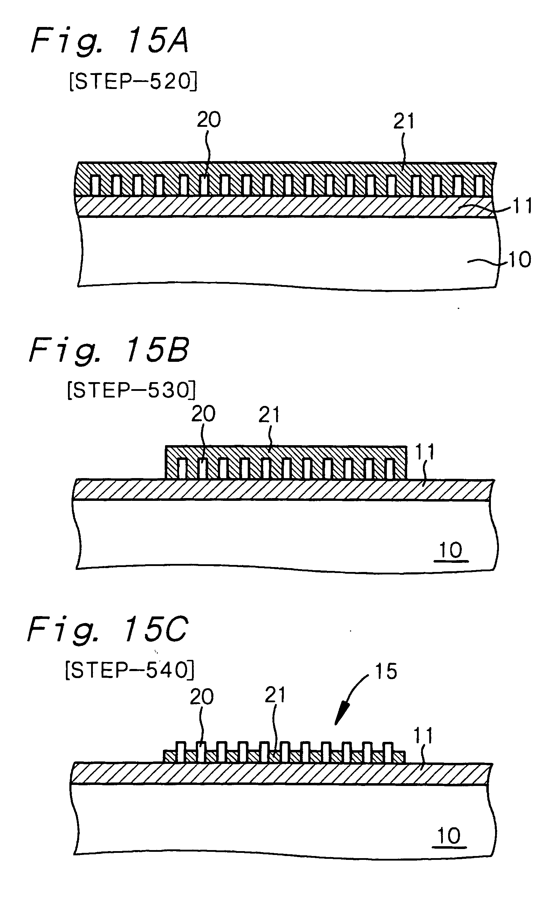

The manufacturing method of an electron emitting member, the manufacturing method of a field emission device and the manufacturing method of a display in Example 5 will be explained below with reference to Figs. 15A, 15B and 15C.

### [Step-500]

First, a rectangular cathode electrode 11 is formed on a supporting member 10 made, for example, of a glass substrate in the same manner as in [Step-100] in Example 1. At the same time, a wiring 11A (see Fig. 2) connected to the cathode electrode 11 is formed on the supporting member 10. The electrically conductive material layer is, for example, an approximately 0.2 µm thick chromium (Cr) layer formed by a sputtering method.

### [Step-510]

Then, a metal compound solution consisting of an organic acid metal compound in which the carbon nanotube structures are dispersed is applied onto the cathode electrode 11 (corresponding to a substratum), for example, by a spray method. Specifically, a metal compound solution shown in Table 6 is used. In the metal compound solution, the organic tin compound and the organic indium compound are in a state where they are dissolved in an acid (for example, hydrochloric acid, nitric acid or sulfuric acid). The carbon nanotubes are produced by an arc discharge method and have an average diameter of 30 nm and an average length of 1 µm. In the application, the supporting member (substratum) is heated to 70 - 150 °C. Atmospheric atmosphere is employed as an application atmosphere. After the application, the supporting member (substratum) is heated for 5 to 30 minutes to fully evaporate butyl acetate off. When the supporting member (substratum) is heated during the application as described above, the applied solution begins to dry before the carbon nanotubes are self-leveled toward a horizontal direction to the surface of the substratum or cathode electrode. As a result, the carbon nanotubes can be arranged on the surface of the substratum or cathode electrode in a state where the carbon nanotubes are not in a level position. That is, the carbon nanotube structures can be aligned in the direction in which the top portion of the carbon nanotube faces the anode electrode, in other words, the carbon nanotube structure comes close to the normal line direction of the substratum or supporting member. The metal compound solution having a composition shown in Table 6 may be prepared beforehand, or a metal compound solution containing no carbon nanotubes may be prepared beforehand and the carbon nanotubes and the metal compound solution may be mixed before the application. For improving dispensability of the carbon nanotubes, ultrasonic wave may be applied when the metal compound solution is prepared.

**Table 6**

| | |
|---|---|
| Organic tin compound and organic indium compound | 0.1 - 10 parts by weight |
| Dispersing agent (sodium dodecylsulfate) | 0.1 - 5 parts by weight |
| Carbon nanotubes | 0.1 - 20 parts by weight |
| Butyl acetate | Balance |

When a solution of an organic tin compound dissolved in an acid is used as an organic acid metal compound solution, tin oxide is obtained as a matrix. When a solution of an organic indium compound dissolved in an acid is used, indium oxide is obtained as a matrix. When a solution of an organic zinc compound dissolved in an acid is used, zinc oxide is obtained as a matrix. When a solution of an organic antimony compound dissolved in an acid is used, antimony oxide is obtained as a matrix. When a solution of an organic antimony compound and an organic tin compound dissolved in an acid is used, antimony-tin oxide is obtained as a matrix. Further, when an organic tin compound is used as an organic metal compound solution, tin oxide is obtained as a matrix. When an organic indium compound is used, indium oxide is obtained as a matrix. When an organic zinc compound is used, zinc oxide is obtained as a matrix. When an organic antimony compound is used, antimony oxide is obtained as a matrix. When an organic antimony compound and an organic tin compound are used, antimony-tin oxide is obtained as a matrix. Alternatively, a solution of metal chloride (for example, tin chloride or indium chloride) may be used.

After the metal compound solution is dried, salient convexo-concave shapes may be formed on the surface of the metal compound layer in some cases. In such cases, it is desirable to apply the metal compound solution again onto the metal compound layer without heating the supporting member.

### [Step-520]

Then, the metal compound constituted of the organic acid metal compound is fired, to give an electron emitting portion 15 in which the carbon nanotubes 20 are fixed onto the surface of the cathode electrode (substratum ) 11 with the matrix 21 (which is specifically a metal oxide, and more specifically, ITO) containing metal atoms (specifically, In and Sn) constituting the organic acid metal compound. The firing is carried out in an atmospheric atmosphere at 350 °C for 20 minutes. In this manner, a structure shown in Fig. 15A can be obtained. The thus-obtained matrix 21 had a volume resistivity of 5 x 10⁻² Ω·m. When the organic acid metal compound is used as a starting material, the matrix 21 made of ITO can be formed at a low firing temperature of as low as 350 °C. An organometal compound may be used in place of the organic acid metal compound. When a solution of metal chloride (for example, tin chloride and indium chloride) is used, the matrix 21 made of ITO is formed while the tin chloride and indium chloride are oxidized by the firing.

### [Step-530]

Then, a resist layer is formed on the entire surface, and the circular resist layer having a diameter, for example, of 10 µm is retained above a desired region of the cathode electrode 11. The matrix 21 is etched with hydrochloric acid having a temperature of 10 to 60 °C for 1 to 30 minutes, to remove an unnecessary portion of the electron emitting portion. Further, when the carbon nanotubes still remain in a region except the desired region, the carbon nanotubes are etched by an oxygen plasma etching treatment under a condition shown in the following Table 7. A bias power may be 0 w, i.e., direct current, while it is desirable to apply the bias power. The supporting member may be heated, for example, to approximately 80 °C.

**Table 7**

| | |
|---|---|
| Apparatus to be used | RIE apparatus |
| Gas to be introduced | Gas containing oxygen |
| Plasma exciting power | 500 W |
| Bias power | 0 - 150 W |
| Treatment time period | at least 10 seconds |

Alternatively, the carbon nanotubes can be etched by a wet etching treatment under a condition shown in Table 8.

**Table 8**

| | |
|---|---|
| Solution to be used | KMnO₄ |
| Temperature | 20 - 120 °C |
| Treatment time period | 10 seconds - 20 minutes |

Then, the resist layer is removed, whereby a structure shown in Fig. 15B can be obtained. It is not necessarily required to retain a circular electron emitting portion having a diameter of 10 µm. For example, the electron emitting portion may be retained on the cathode electrode 11.

### [Step-540]

Then, part of the matrix 21 is removed under a condition shown in the following Table 9, to obtain carbon nanotubes 20 in a state where top portions thereof are projected from the matrix 21. In this manner, an electron emitting portion 15 or electron emitting member having a structure shown in Fig. 15C can be obtained.

**Table 9**

| | |
|---|---|
| Etching solution | Hydrochloric acid |
| Etching time period | 10 seconds - 30 seconds |
| Etching temperature | 10 - 60 °C |

Some or all of the carbon nanotubes 20 may change in their surface state due to the etching of the matrix 21 (for example, oxygen atoms or oxygen molecules or fluorine atoms are adsorbed to their surfaces), and the carbon nanotubes 20 are deactivated with respect of field emission in some cases. Therefore, then, it is preferred to subject the electron emitting member or the electron emitting portion 15 to a plasma treatment in a hydrogen gas atmosphere. By the plasma treatment, the electron emitting member or the electron emitting portion 15 is activated, and the efficiency of emission of electrons from the electron emitting member or the electron emitting portion 15 is further improved. The plasma treatment can be carried out under the same condition as that shown, for example, in Table 4.

Then, for releasing a gas from the carbon nanotubes 20, a heat treatment or various plasma treatments may be carried out. The carbon nanotubes 20 may be exposed to a gas containing a substance which is to be adsorbed thereon, for allowing such a substance to be adsorbed intentionally on the surface of the carbon nanotube 20. Further, for purifying the carbon nanotubes 20, an oxygen plasma treatment or a fluorine plasma treatment may be carried out.

### [Step-550]

Then, a display is assembled in the same manner as in [Step-140] in Example 1.

[Step-500], [Step-510], [Step-530], [Step-520], [Step-540] and [Step-550] may be carried out in this order.

### Example 6

Example 6 is concerned with the electron emitting member provided by the present invention, the manufacturing method of an electron emitting member according to the second aspect of the present invention, the field emission device and the manufacturing method thereof according to the fourth aspect of the present invention, and, the display of so-called three-electrodes-type and the manufacturing method thereof according to the fourth aspect of the present invention.

The schematic partial end view of a field emission device, the schematic partial end view of a display and the schematic partial perspective view of a cathode panel CP and an anode panel AP exploded are similar to those shown in Fig. 10B, Fig. 7 and Fig. 8, respectively. In Example 6, the field emission device also comprises a cathode electrode 11 (corresponding to a substratum) formed on a supporting member 10; an insulating layer 12 formed on the supporting member 10 and the cathode electrode 11; a gate electrode 13 formed on the insulating layer 12; an opening portion formed through the gate electrode 13 and the insulating layer 12 (a first opening portion formed through the gate electrode 13 and a second opening portion 14B formed through the insulating layer 12); and an electron emitting portion 15 exposed in the bottom portion of the second opening portion 14B. The electron emitting portion 15 comprises a matrix 21 and carbon nanotube structures (specifically, carbon nanotubes 20) embedded in the matrix 21 in a state where the top portion of each carbon nanotube structure is projected. Further, the matrix 21 comprises indium-tin oxide (ITO).

The display has the same structure as that of the display explained in Example 2, and the anode panel AP can be structured to have the same structure as that of the anode panel AP explained in Example 1, so that a detailed explanation thereof will be omitted.

The manufacturing method of an electron emitting member, the manufacturing method of a field emission device and the manufacturing method of a display in Example 6 will be explained below with reference to Figs. 9A and 9B and Figs. 10A and 10B.

### [Step-600]

First, a cathode electrode 11 in the form of a stripe is formed on a supporting member 10 made, for example, of a glass substrate in the same manner as in [Step-200] in Example 2.

### [Step-610]

Then, in the same manner as in [Step-510] to [Step-530] in Example 5, a metal compound solution consisting of an organic acid metal compound in which carbon nanotube structures are dispersed is applied onto a cathode electrode 11 (corresponding to a substratum) in a heated state, and the metal compound consisting of the organic acid metal compound is fired, whereby there can be obtained the electron emitting portion 15 in which the carbon nanotubes 20 are fixed to the surface of the cathode electrode 11 with a matrix (specifically, made of ITO) 21 containing a metal atom constituting the organic acid metal compound (see Fig. 9A). [Step-510], [Step-520] and [Step-530] may be carried out in this order. Further, the organic acid metal compound solution may be replaced with an organometal compound solution, or may be replaced with a solution of a metal chloride (for example, tin chloride or indium chloride).

### [Step-620]

Then, the insulating layer 12 is formed on the electron emitting portion 15, the supporting member 10 and the cathode electrode 11. Specifically, for example, an approximately 1 µm thick insulating layer 12 is formed on the entire surface by a CVD method using TEOS (tetraethoxysilane) as a source gas.

### [Step-630]

Then, in the same manner as in [Step-230] and [Step-240] in Example 2, the gate electrode 13 having a first opening portion 14A is formed on the insulating layer 12, and a second opening portion 14B communicating with the first opening portion 14A formed through the gate electrode 13 is formed through the insulating layer 12 (see Fig. 9B). When the matrix 21 is composed of a metal oxide such as ITO, the matrix 21 is not etched in any case when the insulating layer 12 is etched. That is, the etching selectivity ratio of the insulating layer 12 and the matrix 21 is nearly infinite, so that the carbon nanotubes 20 are not at all damaged when the insulating layer 12 is etched.

### [Step-640]

Preferably, then, in the electron emitting portion 15 exposed in the bottom portion of the second opening portion 14B, part of the matrix 21 is removed in the same manner as in [Step-540] in Example 5, to obtain the carbon nanotubes 20 whose top portions are projected from the matrix 21 (see Fig. 10A).

### [Step-650]

Preferably, then, the side wall surface of the second opening portion 14B formed through the insulating layer 12 is isotropically etched backward, in the same manner as in [Step-260] in Example 2, for exposing the opening end portion of the gate electrode 13. In this manner, a field emission device similar to that shown in Fig. 10B can be completed.

### [Step-660]

Then, a display is assembled in the same manner as in [Step-140] in Example 1.

[Step-630] may be followed by [Step-650] and [Step-640] in this order.

While the present invention has been explained on the basis of Examples hereinabove, the present invention shall not be limited thereto. Those various conditions, materials used, constitutions and structures of the field emission device and the display and the manufacturing method of them, explained in Examples, are given as examples and can be changed or altered as required. The production method, forming method or deposition condition of carbon nanotubes and a diamond-like amorphous carbon are also given as examples and may be changed or altered as required. For example, in Example 1, [Step-100] and [Step-110] may be replaced with [Step-300] and [Step-310] in Example 3. Further, in [Step-110] to [Step-120] in Example 1, the so-called lift-off method using a resist material layer may be replaced with a lithography technique and an etching technique. That is, the carbon nanotubes 20 are disposed on the cathode electrode 11 (corresponding to a substratum) and a diamond-like amorphous carbon for the matrix 21 is deposited on the carbon nanotubes 20 to form the composite layer, and then, an unnecessary portion of the composite layer may be removed by a lithography technique and an etching technique. Further, in [Step-510] in Example 5, the metal compound solution in which the carbon nanotube structures are dispersed may be applied onto a predetermined region of the cathode electrode 11 (corresponding to a substratum), for example by a spray method and a lift-off method.

The carbon nanotubes used in Examples can be replaced with carbon nanofibers which have a fiber structure having, for example, an average diameter of 30 nm and an average length of 1 µm and are produced by a CVD method (gaseous phase synthetic method). Further, polygraphite can be also used in place of the carbon nanotubes.

The matrix can be constituted, for example, of water glass in place of the diamond-like amorphous carbon. In this case, water glass is used as a binder material (matrix), and a dispersion of the carbon nanotube structures in the binder material and a solvent can be, for example, applied onto the substratum or onto a predetermined region of the cathode electrode, followed by removal of the solvent and firing of the binder material. The firing can be carried out, for example, in a dry atmosphere at 400 °C for 30 minutes. For removing the matrix in the surface of the composite layer, the water glass (matrix) can be wet-etched with a sodium hydroxide (NaOH) aqueous solution. The concentration and temperature of the sodium hydroxide (NaOH) aqueous solution and the etching time period can be determined by conducting various experiments in order to find an optimum condition.

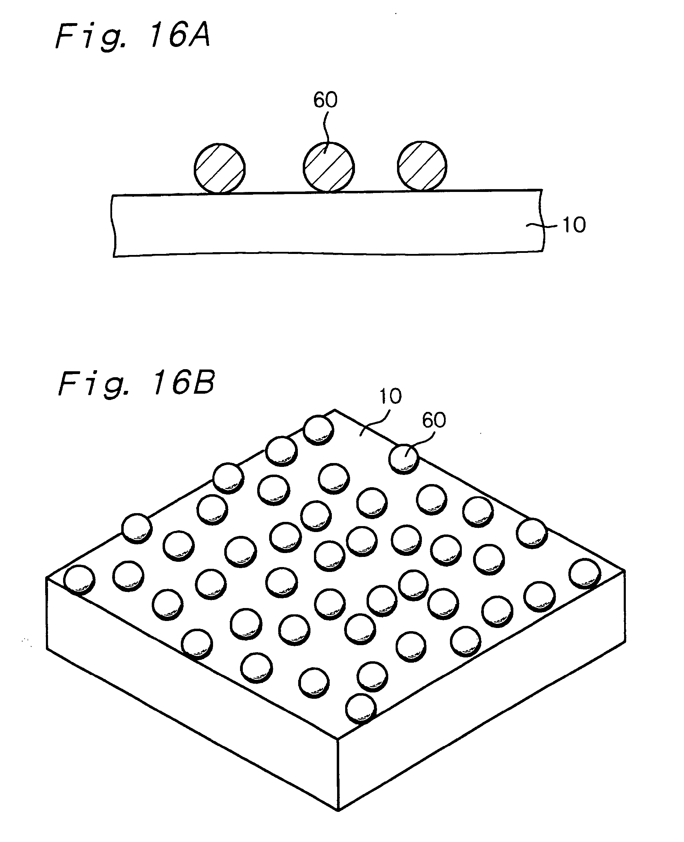

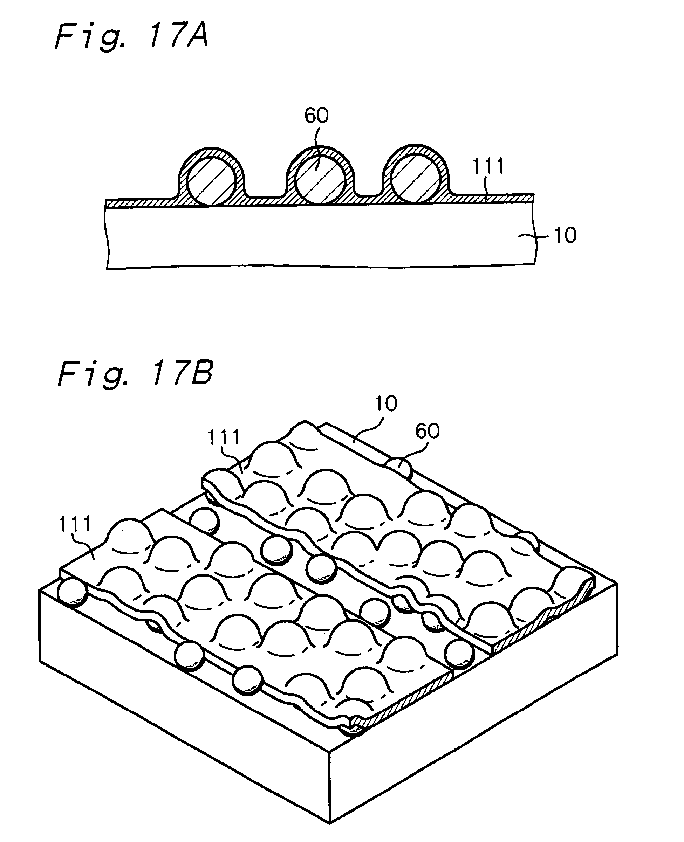

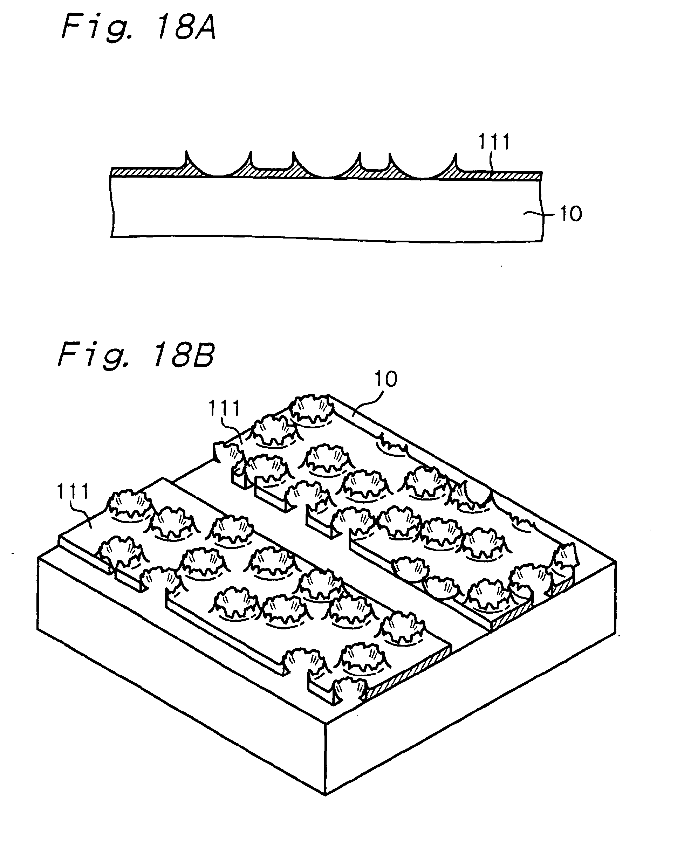

A convexo-concave portion may be formed on the surface of the substratum or the cathode electrode in the field emission device. The convexo-concave portion can be formed by a method in which, for example, tungsten is employed to constitute the substratum or cathode electrode, SF₆ is used as an etching gas, and the tungsten is dry-etched on the basis of the RIE method under a condition where the etching rate of grain boundaries of tungsten crystal grains constituting the cathode electrode is higher than the etching rate of tungsten crystal grains. Alternatively, the convexo-concave portion can be formed by a method in which spheres 60 are sprayed on the supporting member (see Figs. 16A and 16B), a cathode electrode 111 is formed on the spheres 60 (see Figs. 17A and 17B), and the spheres 60 are moved, for example, by combustion (see Figs. 18A and 18B).

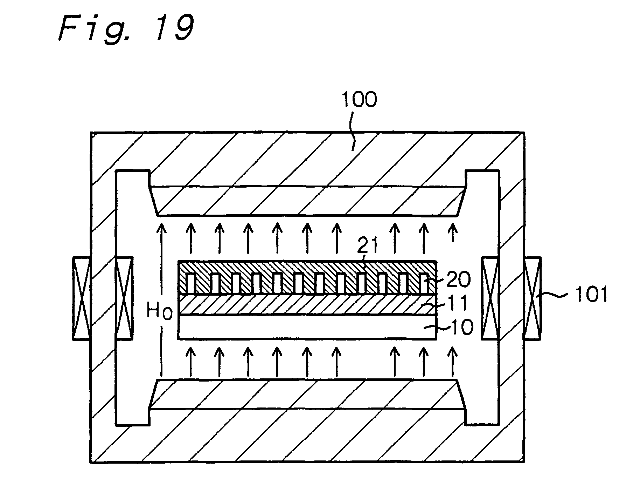

The carbon nanotube structures may be constituted of the carbon nanotubes and/or carbon nanofibers containing the magnetic material or the carbon nanotubes and/or carbon nanofibers having the magnetic material layer formed on the surface of each of them. In this case, for example, in [Step-510] in Example 5, the metal compound solution is applied onto the substratum or the cathode electrode and then the substratum or the supporting member is placed in a magnetic field, whereby the carbon nanotube structures can be aligned in the direction closer to the normal line direction of the substratum or the supporting member. That is, the top portion of the carbon nanotube structure can be brought into a state where the top portion is drawn toward to the anode electrode. Specifically, for example, as shown in Fig. 19, the cathode panel at a stage following the drying of the metal compound solution is allowed to pass through a cavity (intensity of an external magnetic field H₀) of a magnetic pole piece (pole piece) 100 around which a coil 101 is wound. The above cathode panel is allowed to pass in the direction perpendicular to the paper surface of the drawing with a transport means that is not shown in the drawing. Desirably, the maximum magnetic flux density between magnetic poles of the magnetic pole piece 100 is 0.001 tesla to 100 tesla, preferably 0.1 tesla to 5 tesla. For example, it is 0.6 tesla (6 k gausses). While Fig. 19 shows magnetic flux lines going upward in the drawing, the magnetic flux lines may have the opposite direction. At a finish stage of the magnetic pole piece 100 along the transport direction, for example, an infrared heater is provided as a drying means that is not shown, and the metal compound solution is immediately dried in a state where the carbon nanotube structures (specifically, carbon nanotubes 2) are aligned. Alternatively, for example, there may be employed a constitution in which the supporting member is placed in a magnetic filed while the supporting member is heated with a hot plate, whereby the metal compound solution is dried while the carbon nanotube structures are aligned. Further, alternatively, the substratum or the supporting member may be placed in a magnetic field after [Step-540] in Example 5, so that the carbon nanotube structures can be aligned in the direction toward the anode electrode. For example, a permanent magnetic of an Nd-Fe-B system may be used as well.

The process of alignment of the carbon nanotube structures will be outlined below. The metal compound solution is in a flowing state at a stage before it is placed in a magnetic field. The major axes of the carbon nanotube structures are in every direction in the metal compound solution. Since the carbon nanotube structure has a form-magnetic anisotropy, the carbon nanotube structure is aligned such that the major axis thereof comes to be in parallel with the direction of the magnetic field. That is, the major axes of the carbon nanotube structures are arranged in the direction that crosses the plane irradiated with electrons. Specifically, the above plane irradiated with electrons is the surface of the phosphor layer. The carbon nanotube structures come into a state where they stand forming a certain angle shifted from the direction vertical or perpendicular to the surface of the cathode electrode. When the substratum or the supporting member is placed in a magnetic field after [Step-540] in Example 5, that is, when the substratum or the supporting member is placed in a magnetic field in a state where the carbon nanotube structures are embedded in the matrix, that top portion of each of the carbon nanotube structures which is projected from the matrix is aligned.

When the above technique is applied to Example 6, the supporting member or the substratum can be placed in a magnetic field to align the carbon nanotube structures in a step similar to [Step-510] in [Step-610], after completion of a step similar to [Step-520] in [Step-610] or after completion of [Step-640]. When the above technique is applied to Example 1 or Example 4, the supporting member or the substratum can be placed in a magnetic field to align the carbon nanotube structures in [Step-110] or after completion of [Step-130]. Further, when the above technique is applied to Example 2, the supporting member or the substratum can be placed in a magnetic field to align the carbon nanotube structures in a step similar to [Step-110] in [Step-210] or after completion of [Step-250] or [Step-260].

With regard to the field emission device, there have been explained only embodiments in which one electron emitting portion corresponds to one opening portion. However, the field emission device may have a structure in which a plurality of electron emitting portions correspond to one opening portion or one electron emitting portion corresponds to a plurality of opening portions. Alternatively, there may be also employed an embodiment in which a plurality of first opening portions are formed through the gate electrode, one second opening portion communicating the plurality of the first opening portions is formed through the insulating layer and one or a plurality of electron emitting portion(s) is/are formed.

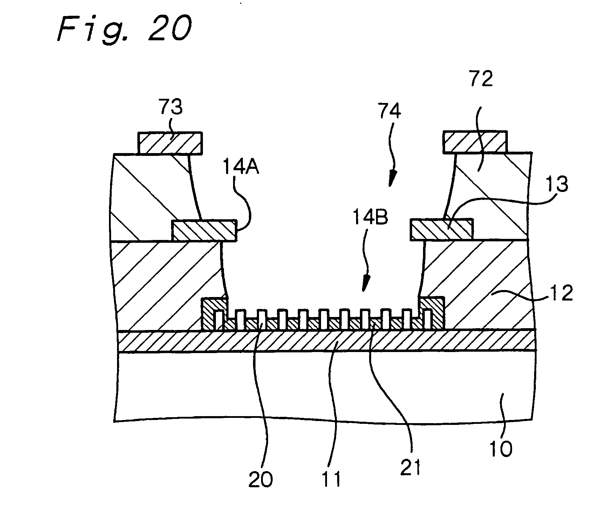

The field emission device in the present invention may have a constitution in which a second insulating layer 72 is further formed on the gate electrode 13 and the insulating layer 12, and a focus electrode 73 is formed on the second insulating layer 72. Fig. 20 shows a schematic partial end view of the thus-constituted field emission device. The second insulating layer 72 has a third opening portion 74 communicating with the first opening portion 14A. The focus electrode 73 may be formed as follows. For example, in [Step-230] in Example 2, the gate electrode 13 in the form of a stripe is formed on the insulating layer 12; the second insulating layer 72 is formed; a patterned focus electrode 73 is formed on the second insulating layer 72; the third opening portion 74 is formed in the focus electrode 73 and the second insulating layer 72; and further, the first opening portion 14A is formed in the gate electrode 13. The focus electrode may be a focus electrode having a form in which focus electrode units, each of which corresponds to one or a plurality of electron emitting portions or one or a plurality of pixels, are gathered, or may be a focus electrode having a form in which the effective field is covered with a sheet of an electrically conductive material, depending upon the patterning of the focus electrode.

Not only the focus electrode is formed by the above method, but also the focus electrode can be formed by forming an insulating film made, for example, of SiO₂ on each surface of a metal sheet made, for example, of 42 % Ni-Fe alloy having a thickness of several tens micrometers, and then forming the opening portions in regions corresponding to pixels by punching or etching. And, the cathode panel, the metal sheet and the anode panel are stacked, a frame is arranged in circumferential portions of the two panels, and a heat treatment is carried out to bond the insulating film formed on one surface of the metal sheet and the insulating layer 12 and to bond the insulating film formed on the other surface of the metal sheet and the anode panel, whereby these members are integrated, followed by evacuating and sealing, and the display can be also completed.

The gate electrode can be formed so as to have a form in which the effective field is covered with one sheet of an electrically conductive material (having opening portions). In this case, the cathode electrode has the same structure as that explained in Example 1. A positive voltage (for example, 160 volts) is applied to the gate electrode. And, a switching element constituted, for example, of TFT is provided between the cathode electrode constituting a pixel and the cathode-electrode control circuit, and the voltage application state to the cathode electrode constituting each pixel is controlled by the operation of the above switching element, to control the light emission state of the pixel.

Alternatively, the cathode electrode can be formed so as to have a form in which the effective filed is covered with one sheet of an electrically conductive material. In this case, the electron emitting portion which is provided with the field emission device and constitutes the pixel is formed on a predetermined portion of such one sheet of an electrically conductive material. A voltage (for example, 0 volt) is applied to the cathode electrode. And, a switching element constituted, for example, of TFT is provided between the gate electrode having a rectangular form and constituting a pixel and the gate-electrode control circuit, and the voltage application state to the electron emitting portion constituting each pixel is controlled by the operation of the above switching element, to control the light emission state of the pixel.

In the present invention, the electron emitting member or the electron emitting portion can have a structure in which the carbon nanotube structures are embedded in the matrix in a state where the top portion of each carbon nanotube structure is projected, so that high electron emission efficiency can be attained.

In the manufacturing method of an electron emitting member according to the first aspect of the present invention, in the manufacturing method of a field emission device according to the first or second aspect of the present invention, or in the manufacturing method of a display according to the first or second aspect of the present invention, the composite layer having the carbon nanotube structures embedded in the matrix is formed in the step of forming the electron emitting member or electron emitting portion, so that the carbon nanotube structure is not or almost not damaged in subsequent steps such as the step of forming the opening portion through the insulating layer. Further, in a state where the composite layer is formed, for example, the opening portion is formed, so that the cathode electrode and the gate electrode in no case form a short circuit through the carbon nanotube structure, and there is no limitation to be imposed on the size of the opening portion and the thickness of the insulating layer.

When the present invention uses a diamond-like amorphous carbon as a matrix, the diamond-like amorphous carbon can reliably fix the carbon nanotube structures to the substratum or cathode electrode since it has remarkably excellent fixing (bonding) strength. Further, there is no case where the matrix is thermally decomposed by a subsequent heat treatment or the like to show a decrease in fixing strength or release gases, and the carbon nanotube structures are not caused to suffer any degradation in properties. Further, since the carbon nanotube structures and the diamond-like amorphous carbon are constituted of substances essentially of the same quality, there is no case where a portion of the carbon nanotube structure which portion is an electron-path portion suffers an alteration in crystallinity or such a portion has an alteration in atomic bonding state. The carbon nanotube structure is not at all caused to have an alteration in electric characteristic. Furthermore, on one hand, the carbon nanotube structure is a remarkably excellent crystal, and on the other hand, the diamond-like amorphous carbon is non-crystalline, so that the diamond-like amorphous carbon is etched faster due to a difference in etching rate. Therefore, the top portion of the carbon nanotube structure can be reliably projected from the diamond-like amorphous carbon as a matrix. Moreover, the diamond-like amorphous carbon is a chemically stable substance and has excellent mechanical properties, so that physical damage of the carbon nanotube structure can be prevented, and a broad process window can be secured in a process after the diamond-like amorphous carbon is formed as a matrix. Further, having high thermal conductivity, the diamond-like amorphous carbon has an excellent heat-releasing effect even when the temperature of the carbon nanotube structure is increased due to a resistance heat and the like, so that the thermal destruction of the carbon nanotube structure can be prevented, and that the display can be improved in reliability. Further, having a very small electron affinity, the diamond-like amorphous carbon has an effect on decreasing a work function, and it makes it possible to reduce the threshold electric field for field emission and can be remarkably advantageously applied to the field emission. Further, since the diamond-like amorphous carbon has a relatively wide band gap, electrons are transmitted preferentially through the carbon nanotube structure, so that there is no possibility of an electric leak taking place.

In the preferred embodiment of the electron emitting member provided by the present invention, in the manufacturing method of an electron emitting member according to the second aspect of the present invention, in the field emission device according to the third or fourth aspect of the present invention, in the manufacturing method of a field emission device according to third or fourth aspect of the present invention, in the display according to the third or fourth aspect of the present invention, or in the manufacturing method of a display according to the third or fourth aspect of the present invention, the matrix is constituted of a metal oxide, so that the carbon nanotube structure is damaged to less degree, for example, in the process of forming the opening portion through the insulating layer. Moreover, in a state where the electron emitting member or the electron emitting portion has been formed, for example, the opening portion is formed, so that there is no case where the cathode electrode and the gate electrode form a short circuit through the carbon nanotube structure. There is therefore no limitation to be imposed on the size of the opening portion and the thickness of the insulating layer.

Further, the carbon nanotube structures can be reliably fixed to the substratum or cathode electrode with the metal oxide, and there is no case where the matrix is thermally decomposed by a subsequent heat treatment or the like to show a decrease in fixing strength or to release gases, so that the carbon nanotube structure is free from a degradation in characteristics. Further, since the metal oxide is physically, chemically and thermally stable, there is no case where a portion of the carbon nanotube structure which portion is an electron-path portion suffers an alteration in crystallinity or such a portion has an alteration in atomic bonding state. Further, the carbon nanotube structure has no alteration in electric characteristic, and there can be reliably secured electric conductivity between the substratum or cathode electrode and the carbon nanotube structures. Further, on the basis of a difference in etching rate, the matrix can be etched faster, so that the top portion of the carbon nanotube structure can be reliably projected from the metal oxide as a matrix. Further, since the metal oxide is a chemically stable substance and has excellent mechanical properties, the physical damage of the carbon nanotube structure can be prevented, and a broad process window can be secured in a process after the metal oxide is formed as a matrix. Further, having high thermal conductivity, the metal oxide has an excellent heat-releasing effect even when the temperature of the carbon nanotube structure is increased due to a resistance heat and the like, so that the thermal destruction of the carbon nanotube structure can be prevented, and that the display can be improved in reliability. Further, the metal oxide can be formed by firing the metal compound at a relatively low temperature, and since the metal compound solution is used, the carbon nanotube structures can be uniformly arranged on the substratum or cathode electrode.

Since the carbon nanotube structures are aligned by placing the substratum or the supporting member in a magnetic filed in the manufacturing method of an electron emitting member according to the second aspect of the present invention, or since the substratum or the supporting member is heated when the metal compound solution in which the carbon nanotube structures are dispersed is applied onto the substratum or the cathode electrode in the manufacturing method of an electron emitting device according to the third or fourth aspect of the present invention or in the manufacturing method of a display according to the third or fourth aspect of the present invention, the top portion of the carbon nanotube structure can be aligned in the direction that is as close to the normal line direction of the substratum or the supporting member as possible. As a result, the electron emitting member or the electron emitting portion can be improved and can be made uniform in electron emission properties.

## Claims

1. An electron emitting member comprising a matrix, and carbon nanotube structures embedded in the matrix in a state where the top portion of each carbon nanotube structure is projected.

2. The electron emitting member according to claim 1, in which the matrix is composed of a diamond-like amorphous carbon.

3. The electron emitting member according to claim 2, in which the diamond-like amorphous carbon has a peak of half-value width of 50 cm⁻¹ or more in the wave number range of 1400 to 1630 cm⁻¹ in Raman spectrum using a laser beam having a wavelength of 514.5 nm.

4. The electron emitting member according to claim 1, in which the matrix is constituted of a metal oxide.

5. The electron emitting member according to claim 4, in which the matrix is obtained by firing of a metal compound.

6. The electron emitting member according to claim 5, in which the metal compound is composed of an organometal compound.

7. The electron emitting member according to claim 5, in which the metal compound is composed of an organic acid metal compound.

8. The electron emitting member according to claim 5, in which the metal compound is composed of a metal salt.

9. The electron emitting member according to claim 4, in which the matrix is constituted of tin oxide, indium oxide, indium-tin oxide, zinc oxide, antimony oxide or antimony-tin oxide.

10. The electron emitting member according to claim 4, in which the matrix has a volume resistivity of 1 x 10⁻⁹ Ω·m to 5 x 10⁸ Ω·m.

11. The electron emitting member according to claim 1, in which the carbon nanotube structure is constituted of a carbon nanotube and/or a carbon nanofiber.

12. The electron emitting member according to claim 1, in which the carbon nanotube structure is constituted of a carbon nanotube and/or a carbon nanofiber containing a magnetic material, or is constituted of a carbon nanotube and/or a carbon nanofiber having a surface on which a magnetic material layer is formed.

13. A manufacturing method of an electron emitting member comprising the steps of;
(a) forming, on a substratum, a composite layer having a constitution in which carbon nanotube structures are embedded in a matrix, and
(b) removing the matrix in the surface of the composite layer, to obtain an electron emitting member
in which the carbon nanotube structures are embedded in the matrix in a state where the top portion of each carbon nanotube structure is projected.

14. The manufacturing method of an electron emitting member according to claim 13, in which the matrix is composed of a diamond-like amorphous carbon.

15. The manufacturing method of an electron emitting member according to claim 14, in which the diamond-like amorphous carbon has a peak of half-value width of 50 cm⁻¹ or more in the wave number range of 1400 to 1630 cm⁻¹ in Raman spectrum using a laser beam having a wavelength of 514.5 nm.

16. The manufacturing method of an electron emitting member according to claim 13, in which the carbon nanotube structure is constituted of a carbon nanotube and/or a carbon nanofiber.

17. The manufacturing method of an electron emitting member according to claim 13, in which the carbon nanotube structure is constituted of a carbon nanotube and/or a carbon nanofiber containing a magnetic material, or is constituted of a carbon nanotube and/or a carbon nanofiber having a surface on which a magnetic material layer is formed.

18. A manufacturing method of an electron emitting member comprising the steps of;
(a) applying, onto a substratum, a metal compound solution in which carbon nanotube structures are dispersed, and
(b) firing the metal compound, to obtain an electron emitting member in which the carbon nanotube structures are fixed to the surface of the substratum with a matrix containing a metal atom constituting the metal compound.

19. The manufacturing method of an electron emitting member according to claim 18, in which the metal compound is composed of an organometal compound.

20. The manufacturing method of an electron emitting member according to claim 18, in which the metal compound is composed of an organic acid metal compound.

21. The manufacturing method of an electron emitting member according to claim 18, in which the metal compound is composed of a metal salt.

22. The manufacturing method of an electron emitting member according to claim 18, in which after the step (b), part of the matrix is removed to obtain the carbon nanotube structures in a state where the top portion of each carbon nanotube structure is projected from the matrix.

23. The manufacturing method of an electron emitting member according to claim 18, in which the matrix is constituted of a metal oxide.

24. The manufacturing method of an electron emitting member according to claim 23, in which the matrix is constituted of tin oxide, indium oxide, indium-tin oxide, zinc oxide, antimony oxide or antimony-tin oxide.

25. The manufacturing method of an electron emitting member according to claim 18, in which the matrix has a volume resistivity of 1 x 10⁻⁹ Ω·m to 5 x 10⁸ Ω·m.

26. The manufacturing method of an electron emitting member according to claim 18, in which in the step (a), the substratum is heated.

27. The manufacturing method of an electron emitting member according to claim 18, in which the carbon nanotube structure is constituted of a carbon nanotube and/or a carbon nanofiber.

28. The manufacturing method of an electron emitting member according to claim 18, in which the carbon nanotube structure is constituted of a carbon nanotube and/or a carbon nanofiber containing a magnetic material, or is constituted of a carbon nanotube and/or a carbon nanofiber having a surface on which a magnetic material layer is formed, and
after the step (a) or step (b), the substratum is disposed in a magnetic field to align the carbon nanotube structures.

29. A cold cathode field emission device comprising;
(A) a cathode electrode formed on a supporting member, and
(B) an electron emitting portion formed on the cathode electrode,
in which said electron emitting portion comprises a matrix, and carbon nanotube structures embedded in the matrix in a state where the top portion of each carbon nanotube structure is projected.

30. The cold cathode field emission device according to claim 29, in which the matrix is composed of a diamond-like amorphous carbon.

31. The cold cathode field emission device according to claim 30, in which the diamond-like amorphous carbon has a peak of half-value width of 50 cm⁻¹ or more in the wave number range of 1400 to 1630 cm⁻ ¹ in Raman spectrum using a laser beam having a wavelength of 514.5 nm.

32. The cold cathode field emission device according to claim 29, in which the carbon nanotube structure is constituted of a carbon nanotube and/or a carbon nanofiber.

33. The cold cathode field emission device according to claim 29, in which the carbon nanotube structure is constituted of a carbon nanotube and/or a carbon nanofiber containing a magnetic material, or is constituted of a carbon nanotube and/or a carbon nanofiber having a surface on which a magnetic material layer is formed.

34. A cold cathode field emission device comprising;
(A) a cathode electrode formed on a supporting member,
(B) an insulating layer formed on the supporting member and the cathode electrode,
(C) a gate electrode formed on the insulating layer,
(D) an opening portion formed through the gate electrode and the insulating layer, and
(E) an electron emitting portion exposed in the bottom portion of the opening portion,
in which said electron emitting portion comprises a matrix, and carbon nanotube structures embedded in the matrix in a state where the top portion of each carbon nanotube structure is projected.

35. The cold cathode field emission device according to claim 34, in which the matrix is composed of a diamond-like amorphous carbon.

36. The cold cathode field emission device according to claim 35, in which the diamond-like amorphous carbon has a peak of half-value width of 50 cm⁻¹ or more in the wave number range of 1400 to 1630 cm⁻ ¹ in Raman spectrum using a laser beam having a wavelength of 514.5 nm.

37. The cold cathode field emission device according to claim 34, in which the carbon nanotube structure is constituted of a carbon nanotube and/or a carbon nanofiber.

38. The cold cathode field emission device according to claim 34, in which the carbon nanotube structure is constituted of a carbon nanotube and/or a carbon nanofiber containing a magnetic material, or is constituted of a carbon nanotube and/or a carbon nanofiber having a surface on which a magnetic material layer is formed.

39. A cold cathode field emission device comprising;
(A) a cathode electrode formed on a supporting member, and
(B) an electron emitting portion formed on the cathode electrode,
in which said electron emitting portion comprises a matrix, and carbon nanotube structures embedded in the matrix in a state where the top portion of each carbon nanotube structure is projected, and
the matrix comprises a metal oxide.

40. The cold cathode field emission device according to claim 39, in which the matrix is obtained by firing of a metal compound.

41. The cold cathode field emission device according to claim 40, in which the metal compound is composed of an organometal compound.

42. The cold cathode field emission device according to claim 40, in which the metal compound is composed of an organic acid metal compound.

43. The cold cathode field emission device according to claim 40, in which the metal compound is composed of a metal salt.

44. The cold cathode field emission device according to claim 39, in which the matrix is constituted of tin oxide, indium oxide, indium-tin oxide, zinc oxide, antimony oxide or antimony-tin oxide.

45. The cold cathode field emission device according to claim 39, in which the matrix has a volume resistivity of 1 x 10⁻⁹ Ω·m to 5 x 10⁸ Ω·m.

46. The cold cathode field emission device according to claim 39, in which the carbon nanotube structure is constituted of a carbon nanotube and/or a carbon nanofiber.

47. The cold cathode field emission device according to claim 39, in which the carbon nanotube structure is constituted of a carbon nanotube and/or a carbon nanofiber containing a magnetic material, or is constituted of a carbon nanotube and/or a carbon nanofiber having a surface on which a magnetic material layer is formed.

48. A cold cathode field emission device comprising;
(A) a cathode electrode formed on a supporting member,
(B) an insulating layer formed on the supporting member and the cathode electrode,
(C) a gate electrode formed on the insulating layer,
(D) an opening portion formed through the gate electrode and the insulating layer, and
(E) an electron emitting portion exposed in the bottom portion of the opening portion,
in which said electron emitting portion comprises a matrix, and carbon nanotube structures embedded in the matrix in a state where the top portion of each carbon nanotube structure is projected, and
the matrix comprises a metal oxide.

49. The cold cathode field emission device according to claim 48, in which the matrix is obtained by firing of a metal compound.

50. The cold cathode field emission device according to claim 49, in which the metal compound is composed of an organometal compound.

51. The cold cathode field emission device according to claim 49, in which the metal compound is composed of an organic acid metal compound.

52. The cold cathode field emission device according to claim 49, in which the metal compound is composed of a metal salt.

53. The cold cathode field emission device according to claim 48, in which the matrix is constituted of tin oxide, indium oxide, indium-tin oxide, zinc oxide, antimony oxide or antimony-tin oxide.

54. The cold cathode field emission device according to claim 48, in which the matrix has a volume resistivity of 1 x 10⁻⁹ Ω·m to 5 x 10⁸ Ω·m.

55. The cold cathode field emission device according to claim 48, in which the carbon nanotube structure is constituted of a carbon nanotube and/or a carbon nanofiber.

56. The cold cathode field emission device according to claim 48, in which the carbon nanotube structure is constituted of a carbon nanotube and/or a carbon nanofiber containing a magnetic material, or is constituted of a carbon nanotube and/or a carbon nanofiber having a surface on which a magnetic material layer is formed.

57. A cold cathode field emission display comprising a cathode panel having a plurality of cold cathode field emission devices and an anode panel having a phosphor layer and an anode electrode, said cathode panel and said anode panel being bonded to each other in their circumferential portions,
in which each cold cathode field emission device comprises;
(A) a cathode electrode formed on a supporting member, and
(B) an electron emitting portion formed on the cathode electrode, and
said electron emitting portion comprises a matrix, and carbon nanotube structures embedded in the matrix in a state where the top portion of each carbon nanotube structure is projected.

58. The cold cathode field emission display according to claim 57, in which the matrix is composed of a diamond-like amorphous carbon.

59. The cold cathode field emission display according to claim 58, in which the diamond-like amorphous carbon has a peak of half-value width of 50 cm⁻¹ or more in the wave number range of 1400 to 1630 cm⁻ ¹ in Raman spectrum using a laser beam having a wavelength of 514.5 nm.

60. The cold cathode field emission display according to claim 57, in which the carbon nanotube structure is constituted of a carbon nanotube and/or a carbon nanofiber.

61. The cold cathode field emission display according to claim 57, in which the carbon nanotube structure is constituted of a carbon nanotube and/or a carbon nanofiber containing a magnetic material, or is constituted of a carbon nanotube and/or a carbon nanofiber having a surface on which a magnetic material layer is formed.

62. A cold cathode field emission display comprising a cathode panel having a plurality of cold cathode field emission devices and an anode panel having a phosphor layer and an anode electrode, said cathode panel and said anode panel being bonded to each other in their circumferential portions,
in which each cold cathode field emission device comprises;
(A) a cathode electrode formed on a supporting member,
(B) an insulating layer formed on the supporting member and the cathode electrode,
(C) a gate electrode formed on the insulating layer,
(D) an opening portion formed through the gate electrode and the insulating layer, and
(E) an electron emitting portion exposed in the bottom portion of the opening portion, and
said electron emitting portion comprises a matrix, and carbon nanotube structures embedded in the matrix in a state where the top portion of each carbon nanotube structure is projected.

63. The cold cathode field emission display according to claim 62, in which the matrix is composed of a diamond-like amorphous carbon.

64. The cold cathode field emission display according to claim 63, in which the diamond-like amorphous carbon has a peak of half-value width of 50 cm⁻¹ or more in the wave number range of 1400 to 1630 cm⁻ ¹ in Raman spectrum using a laser beam having a wavelength of 514.5 nm.

65. The cold cathode field emission display according to claim 62, in which the carbon nanotube structure is constituted of a carbon nanotube and/or a carbon nanofiber.

66. The cold cathode field emission display according to claim 62, in which the carbon nanotube structure is constituted of a carbon nanotube and/or a carbon nanofiber containing a magnetic material, or is constituted of a carbon nanotube and/or a carbon nanofiber having a surface on which a magnetic material layer is formed.

67. A cold cathode field emission display comprising a cathode panel having a plurality of cold cathode field emission devices and an anode panel having a phosphor layer and an anode electrode, said cathode panel and said anode panel being bonded to each other in their circumferential portions,
in which each cold cathode field emission device comprises;
(A) a cathode electrode formed on a supporting member, and
(B) an electron emitting portion formed on the cathode electrode, and
said electron emitting portion comprises a matrix, and carbon nanotube structures embedded in the matrix in a state where the top portion of each carbon nanotube structure is projected, and
the matrix comprises a metal oxide.

68. The cold cathode field emission display according to claim 67, in which the matrix is obtained by firing of a metal compound.

69. The cold cathode field emission display according to claim 68, in which the metal compound is composed of an organometal compound.

70. The cold cathode field emission display according to claim 68, in which the metal compound is composed of an organic acid metal compound.

71. The cold cathode field emission display according to claim 68, in which the metal compound is composed of a metal salt.

72. The cold cathode field emission display according to claim 67, in which the matrix is constituted of tin oxide, indium oxide, indium-tin oxide, zinc oxide, antimony oxide or antimony-tin oxide.

73. The cold cathode field emission display according to claim 67, in which the matrix has a volume resistivity of 1 x 10⁻⁹ Ω·m to 5 x 10⁸ Ω·m.

74. The cold cathode field emission display according to claim 67, in which the carbon nanotube structure is constituted of a carbon nanotube and/or a carbon nanofiber.

75. The cold cathode field emission display according to claim 67, in which the carbon nanotube structure is constituted of a carbon nanotube and/or a carbon nanofiber containing a magnetic material, or is constituted of a carbon nanotube and/or a carbon nanofiber having a surface on which a magnetic material layer is formed.

76. A cold cathode field emission display comprising a cathode panel having a plurality of cold cathode field emission devices and an anode panel having a phosphor layer and an anode electrode, said cathode panel and said anode panel being bonded to each other in their circumferential portions,
in which each cold cathode field emission device comprises;
(A) a cathode electrode formed on a supporting member,
(B) an insulating layer formed on the supporting member and the cathode electrode,
(C) a gate electrode formed on the insulating layer,
(D) an opening portion formed through the gate electrode and the insulating layer, and
(E) an electron emitting portion exposed in the bottom portion of the opening portion, and
said electron emitting portion comprises a matrix, and carbon nanotube structures embedded in the matrix in a state where the top portion of each carbon nanotube structure is projected, and
the matrix comprises a metal oxide.

77. The cold cathode field emission display according to claim 76, in which the matrix is obtained by firing of a metal compound.

78. The cold cathode field emission display according to claim 77, in which the metal compound is composed of an organometal compound.

79. The cold cathode field emission display according to claim 77, in which the metal compound is composed of an organic acid metal compound.

80. The cold cathode field emission display according to claim 77, in which the metal compound is composed of a metal salt.

81. The cold cathode field emission display according to claim 76, in which the matrix is constituted of tin oxide, indium oxide, indium-tin oxide, zinc oxide, antimony oxide or antimony-tin oxide.

82. The cold cathode field emission display according to claim 76, in which the matrix has a volume resistivity of 1 x 10⁻⁹ Ω·m to 5 x 10⁸ Ω·m.

83. The cold cathode field emission display according to claim 76, in which the carbon nanotube structure is constituted of a carbon nanotube and/or a carbon nanofiber.

84. The cold cathode field emission display according to claim 76, in which the carbon nanotube structure is constituted of a carbon nanotube and/or a carbon nanofiber containing a magnetic material, or is constituted of a carbon nanotube and/or a carbon nanofiber having a surface on which a magnetic material layer is formed.

85. A manufacturing method of a cold cathode field emission device comprising;
(A) a cathode electrode formed on a supporting member, and
(B) an electron emitting portion formed on the cathode electrode,
said manufacturing method comprising the steps of;
(a) forming, on a predetermined region of the cathode electrode formed on the supporting member, a composite layer having a constitution in which carbon nanotube structures are embedded in a matrix, and
(b) removing the matrix in the surface of the composite layer, to obtain the electron emitting portion
in which the carbon nanotube structures are embedded in the matrix in a state where the top portion of each carbon nanotube structure is projected.

86. The manufacturing method of a cold cathode field emission device according to claim 85, in which in the step (a), a dispersion of the carbon nanotube structures in an organic solvent is applied onto a predetermined region of the cathode electrode, the organic solvent is removed, and then, the carbon nanotube structures are covered with a diamond-like amorphous carbon.

87. The manufacturing method of a cold cathode field emission device according to claim 85, in which in the step (a), the carbon nanotube structures are formed on a predetermined region of the cathode electrode by a CVD method, and then, the carbon nanotube structures are covered with a diamond-like amorphous carbon.

88. The manufacturing method of a cold cathode field emission device according to claim 85, in which in the step (a), a dispersion of the carbon nanotube structures in a binder material is applied onto a predetermined region of the cathode electrode, and then, the binder material is fired or cured, thereby to form the composite layer having a constitution in which the carbon nanotube structures are embedded in the matrix composed of the binder material.

89. The manufacturing method of a cold cathode field emission device according to claim 85, in which the matrix is composed of a diamond-like amorphous carbon.

90. The manufacturing method of a cold cathode field emission device according to claim 89, in which the diamond-like amorphous carbon has a peak of half-value width of 50 cm⁻¹ or more in the wave number range of 1400 to 1630 cm⁻¹ in Raman spectrum using a laser beam having a wavelength of 514.5 nm.

91. The manufacturing method of a cold cathode field emission device according to claim 85, in which the carbon nanotube structure is constituted of a carbon nanotube and/or a carbon nanofiber.

92. The manufacturing method of a cold cathode field emission device according to claim 85, in which the carbon nanotube structure is constituted of a carbon nanotube and/or a carbon nanofiber containing a magnetic material, or is constituted of a carbon nanotube and/or a carbon nanofiber having a surface on which a magnetic material layer is formed.

93. A manufacturing method of a cold cathode field emission device comprising;
(A) a cathode electrode formed on a supporting member,
(B) an insulating layer formed on the supporting member and the cathode electrode,
(C) a gate electrode formed on the insulating layer,
(D) an opening portion formed through the gate electrode and the insulating layer, and
(E) an electron emitting portion exposed in the bottom portion of the opening portion,
said manufacturing method comprising the steps of;
(a) forming, on a predetermined region of the cathode electrode formed on the supporting member, a composite layer having a constitution in which carbon nanotube structures are embedded in a matrix,
(b) forming the insulating layer on the entire surface,
(c) forming the gate electrode on the insulating layer,
(d) forming the opening portion at least through the insulating layer, to expose the composite layer in the bottom portion of the opening portion, and
(e) removing the matrix in the surface of the exposed composite layer, to obtain the electron emitting portion in which the carbon nanotube structures are embedded in the matrix in a state where the top portion of each carbon nanotube structure is projected.

94. The manufacturing method of a cold cathode field emission device according to claim 93, in which in the step (a), a dispersion of the carbon nanotube structures in an organic solvent is applied onto a predetermined region of the cathode electrode, the organic solvent is removed, and then, the carbon nanotube structures are covered with a diamond-like amorphous carbon.

95. The manufacturing method of a cold cathode field emission device according to claim 93, in which in the step (a), the carbon nanotube structures are formed on a predetermined region of the cathode electrode by a CVD method, and then, the carbon nanotube structures are covered with a diamond-like amorphous carbon.

96. The manufacturing method of a cold cathode field emission device according to claim 93, in which in the step (a), a dispersion of the carbon nanotube structures in a binder material is applied onto a predetermined region of the cathode electrode, and then, the binder material is fired or cured, thereby to form the composite layer having a constitution in which the carbon nanotube structures are embedded in the matrix composed of the binder material.

97. The manufacturing method of a cold cathode field emission device according to claim 93, in which the matrix is composed of a diamond-like amorphous carbon.

98. The manufacturing method of a cold cathode field emission device according to claim 97, in which the diamond-like amorphous carbon has a peak of half-value width of 50 cm⁻¹ or more in the wave number range of 1400 to 1630 cm⁻¹ in Raman spectrum using a laser beam having a wavelength of 514.5 nm.

99. The manufacturing method of a cold cathode field emission device according to claim 93, in which the carbon nanotube structure is constituted of a carbon nanotube and/or a carbon nanofiber.

100. The manufacturing method of a cold cathode field emission device according to claim 93, in which the carbon nanotube structure is constituted of a carbon nanotube and/or a carbon nanofiber containing a magnetic material, or is constituted of a carbon nanotube and/or a carbon nanofiber having a surface on which a magnetic material layer is formed.

101. A manufacturing method of a cold cathode field emission device comprising;
(A) a cathode electrode formed on a supporting member, and
(B) an electron emitting portion formed on the cathode electrode,
said manufacturing method comprising the steps of;
(a) forming the cathode electrode on the supporting member,
(b) applying, onto the cathode electrode, a metal compound solution in which carbon nanotube structures are dispersed, and
(c) firing the metal compound, to obtain the electron emitting portion in which the carbon nanotube structures are fixed to the surface of the cathode electrode with a matrix containing a metal atom constituting the metal compound.

102. The manufacturing method of a cold cathode field emission device according to claim 101, in which the metal compound is composed of an organometal compound.

103. The manufacturing method of a cold cathode field emission device according to claim 101, in which the metal compound is composed of an organic acid metal compound.

104. The manufacturing method of a cold cathode field emission device according to claim 101, in which the metal compound is composed of a metal salt.

105. The manufacturing method of a cold cathode field emission device according to claim 101, in which after the step (c), part of the matrix is removed to obtain the carbon nanotube structures in a state where the top portion of each carbon nanotube structure is projected from the matrix.

106. The manufacturing method of a cold cathode field emission device according to claim 101, in which the matrix is constituted of a metal oxide.

107. The manufacturing method of a cold cathode field emission device according to claim 106, in which the matrix is constituted of tin oxide, indium oxide, indium-tin oxide, zinc oxide, antimony oxide or antimony-tin oxide.

108. The manufacturing method of a cold cathode field emission device according to claim 101, in which the matrix has a volume resistivity of 1 x 10⁻⁹ Ω·m to 5 x 10⁸ Ω·m.

109. The manufacturing method of a cold cathode field emission device according to claim 101, in which in the step (b), the supporting member is heated.

110. The manufacturing method of a cold cathode field emission device according to claim 101, in which the carbon nanotube structure is constituted of a carbon nanotube and/or a carbon nanofiber.

111. The manufacturing method of a cold cathode field emission device according to claim 101, in which the carbon nanotube structure is constituted of a carbon nanotube and/or a carbon nanofiber containing a magnetic material, or is constituted of a carbon nanotube and/or a carbon nanofiber having a surface on which a magnetic material layer is formed, and
after the step (b) or step (c), the supporting member is disposed in a magnetic field to align the carbon nanotube structures.

112. A manufacturing method of a cold cathode field emission device comprising;
(A) a cathode electrode formed on a supporting member,
(B) an insulating layer formed on the supporting member and the cathode electrode,
(C) a gate electrode formed on the insulating layer,
(D) an opening portion formed through the gate electrode and the insulating layer, and
(E) an electron emitting portion exposed in the bottom portion of the opening portion,
said manufacturing method comprising the steps of;
(a) forming the cathode electrode on the supporting member,
(b) applying, onto the cathode electrode, a metal compound solution in which carbon nanotube structures are dispersed,
(c) firing the metal compound, to obtain the electron emitting portion in which the carbon nanotube structures are fixed to the surface of the cathode electrode with a matrix containing a metal atom constituting the metal compound,
(d) forming the insulating layer on the entire surface,
(e) forming the gate electrode on the insulating layer, and
(f) forming the opening portion at least through the insulating layer, to expose the electron emitting portion in the bottom portion of the opening portion.

113. The manufacturing method of a cold cathode field emission device according to claim 112, in which the metal compound is composed of an organometal compound.

114. The manufacturing method of a cold cathode field emission device according to claim 112, in which the metal compound is composed of an organic acid metal compound.

115. The manufacturing method of a cold cathode field emission device according to claim 112, in which the metal compound is composed of a metal salt.

116. The manufacturing method of a cold cathode field emission device according to claim 112, in which after the step (f), part of the matrix exposed in the bottom portions of the opening portions is removed to obtain the carbon nanotube structures in a state where the top portion of each carbon nanotube structure is projected from the matrix.

117. The manufacturing method of a cold cathode field emission device according to claim 112, in which the matrix is constituted of a metal oxide.

118. The manufacturing method of a cold cathode field emission device according to claim 117, in which the matrix is constituted of tin oxide, indium oxide, indium-tin oxide, zinc oxide, antimony oxide or antimony-tin oxide.

119. The manufacturing method of a cold cathode field emission device according to claim 112, in which the matrix has a volume resistivity of 1 x 10⁻⁹ Ω·m to 5 x 10⁸ Ω·m.

120. The manufacturing method of a cold cathode field emission device according to claim 112, in which in the step (b), the supporting member is heated.

121. The manufacturing method of a cold cathode field emission device according to claim 112, in which the carbon nanotube structure is constituted of a carbon nanotube and/or a carbon nanofiber.

122. The manufacturing method of a cold cathode field emission device according to claim 112, in which the carbon nanotube structure is constituted of a carbon nanotube and/or a carbon nanofiber containing a magnetic material, or is constituted of a carbon nanotube and/or a carbon nanofiber having a surface on which a magnetic material layer is formed, and
after the step (b), step (c) or step (f), the supporting member is disposed in a magnetic field to align the carbon nanotube structures.

123. A manufacturing method of a cold cathode field emission display in which a cathode panel having a plurality of cold cathode field emission devices and an anode panel having a phosphor layer and an anode electrode are bonded to each other in their circumferential portions,
each cold cathode field emission device comprising;
(A) a cathode electrode formed on a supporting member, and
(B) an electron emitting portion formed on the cathode electrode,
said manufacturing method including the steps of;
(a) forming, on a predetermined region of the cathode electrode formed on the supporting member, a composite layer having a constitution in which carbon nanotube structures are embedded in a matrix, and
(b) removing the matrix in the surface of the composite layer, to obtain the electron emitting portion
in which the carbon nanotube structures are embedded in the matrix in a state where the top portion of each carbon nanotube structure is projected, thereby to form the cold cathode field emission device.

124. A manufacturing method of a cold cathode field emission display in which a cathode panel having a plurality of cold cathode field emission devices and an anode panel having a phosphor layer and an anode electrode are bonded to each other in their circumferential portion,
each cold cathode field emission device comprising;
(A) a cathode electrode formed on a supporting member,
(B) an insulating layer formed on the supporting member and the cathode electrode,
(C) a gate electrode formed on the insulating layer,
(D) an opening portion formed through the gate electrode and the insulating layer, and
(E) an electron emitting portion exposed in the bottom portion of the opening portion,
said manufacturing method including the steps of;
(a) forming, on a predetermined region of the cathode electrode formed on the supporting member, a composite layer having a constitution in which carbon nanotube structures are embedded in a matrix,
(b) forming the insulating layer on the entire surface,
(c) forming the gate electrode on the insulating layer,
(d) forming the opening portion at least through the insulating layer, to expose the composite layer in the bottom portion of the opening portion, and
(e) removing the matrix in the surface of the exposed composite layer, to obtain the electron emitting portion in which the carbon nanotube structures are embedded in the matrix in a state where the top portion of each carbon nanotube structure is projected, thereby to form the cold cathode field emission device.

125. A manufacturing method of a cold cathode field emission display in which a cathode panel having a plurality of cold cathode field emission devices and an anode panel having a phosphor layer and an anode electrode are bonded to each other in their circumferential portions,
each cold cathode field emission device comprising;
(A) a cathode electrode formed on a supporting member, and
(B) an electron emitting portion formed on the cathode electrode,
said manufacturing method including the steps of;
(a) forming the cathode electrode on the supporting member,
(b) applying, onto the cathode electrode, a metal compound solution in which carbon nanotube structures are dispersed, and
(c) firing the metal compound, to obtain the electron emitting portion in which the carbon nanotube structures are fixed to the surface of the cathode electrode with a matrix containing a metal atom constituting the metal compound, thereby to form the cold cathode field emission device.

126. The manufacturing method of a cold cathode field emission display according to claim 125, in which the metal compound is composed of an organometal compound.

127. The manufacturing method of a cold cathode field emission display according to claim 125, in which the metal compound is composed of an organic acid metal compound.

128. The manufacturing method of a cold cathode field emission display according to claim 125, in which the metal compound is composed of a metal salt.

129. A manufacturing method of a cold cathode field emission display in which a cathode panel having a plurality of cold cathode field emission devices and an anode panel having a phosphor layer and an anode electrode are bonded to each other in their circumferential portion,
each cold cathode field emission device comprising;
(A) a cathode electrode formed on a supporting member,
(B) an insulating layer formed on the supporting member and the cathode electrode,
(C) a gate electrode formed on the insulating layer,
(D) an opening portion formed through the gate electrode and the insulating layer, and
(E) an electron emitting portion exposed in the bottom portion of the opening portion,
said manufacturing method including the steps of;
(a) forming the cathode electrode on the supporting member,
(b) applying, onto the cathode electrode, a metal compound solution in which carbon nanotube structures are dispersed,
(c) firing the metal compound, to obtain the electron emitting portion in which the carbon nanotube structures are fixed to the surface of the cathode electrode with a matrix containing a metal atom constituting the metal compound,
(d) forming the insulating layer on the entire surface,
(e) forming the gate electrode on the insulating layer, and
(f) forming the opening portion at least through the insulating layer, to expose the electron emitting portion in the bottom portion of the opening portion, thereby to form the cold cathode field emission device.

130. The manufacturing method of a cold cathode field emission display according to claim 129, in which the metal compound is composed of an organometal compound.

131. The manufacturing method of a cold cathode field emission display according to claim 129, in which the metal compound is composed of an organic acid metal compound.

132. The manufacturing method of a cold cathode field emission display according to claim 129, in which the metal compound is composed of a metal salt.
